# EUROPÄISCHE PATENTSCHRIFT

(11) **EP 0 001 629 B1**
(45) Veröffentlichungstag und Bekanntmachung des Hinweises auf die Patenterteilung: **12.08.1981**
(21) Anmeldenummer: 78101164.8
(22) Anmeldetag: 16.10.1978
(51) Int. Cl.: C09B 62/00, C07D 403/10, D06P 3/04, D06P 3/66

(54) **Wasserlösliche, faserreaktive grüne Phthalocyanin-Azofarbstoffe, ihre Herstellung und ihre Verwendung**
Water-soluble, fibre-reactive, green azo-phthalocyanine dyestuffs, their preparation and their use
Colorants verts azo-phtalocyanines hydrosolubles et réactifs envers les fibres, leur préparation et leur utilisation

(30) Priorität: 18.10.1977 DE 2746681
(43) Veröffentlichungstag der Anmeldung: 02.05.1979
(73) Patentinhaber: CASSELLA Aktiengesellschaft, D-60386 Frankfurt (DE)
(72) Erfinder: Müller, Rolf, Dr., D-6367 Karben - 4 (DE)
(74) Vertreter: Urbach, Hans-Georg

## Beschreibung

Die vorliegende Erfindung betrifft neue, wertvolle, wasserlösliche faserreaktive grüne Phthalocyanin-Azofarbstoffe der Formel 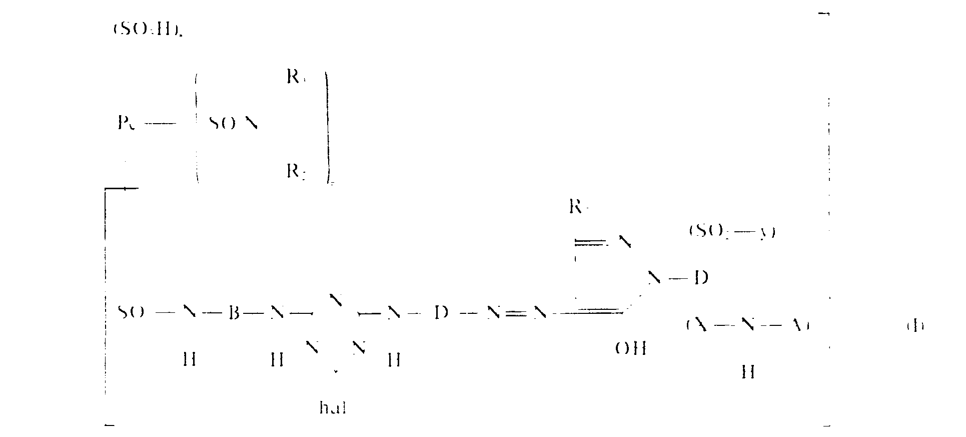 ihre Alkali-, Ammonlum- oder Erdalkalisalze. ihre Herstellung durch Azokupplung oder Kondensation zweier leilstücke und thre Verwendung zum Farben und Bedrucken von Zellulose und Zellulose enthaltenden Textilmaterialien
In der Formel bedeuten
   Pc den Rest eines metallhaltigen oder metallften Phthalocyanins,
   D und D den Phenylen-, Naphthylen-, Diphenyl. Stilben, Phenylcarbamoylphenylrest, den Disulfostilben- oder den Disulfo-diphenylrest, wobei D und D gleich oder verschieden und im Falle des Phenylen- oder Naphthylnrestes gegebenenfalls durch eme -SO,H oder -COOH-Gruppe und pro Kern durch einen Substituenten der Gruppe Alkoxy mit 1 bis 2 C-Atomen oder eine zusätzliche -SO₃H- oder- COOH-Gruppe, durch ein oder zwei gleiche oder verschiedene Halogenatome oder durch ein bis drei gleiche oder verschiedene Alkylreste m bis 2 C-Atomen substituiert sein können,
   B den Rest eines aliphatischen Kohlenwasserstoffs mit 2 bis 6 C-Atomen , den gegebenenfalls durch eine ―SO₃H oder -COOH-Gruppe substituierten Phenylen- oder Naphthylen Rest. der pro Kern durch einen Substituenten der Gruppe Alkoxy mit 1 bis 2 C-Atomen oder eine zusätzliche - SO H oder -COOH-Gruppe, durch ein oder zwei gleiche oder verschiedene Halogenatome oder durch ein bis drei gleiche oder verschiedene Alkylreste mit 1 bis 2 C-Atomen substituiert sein kanr den Disulfostilbenrest oder den Disulfodiphenylrest,
   A den Rest einer faserreaktiven Acylierungskomponente aus der Reihe der Triazine. Chinoxaline. Phthalazine, Pyridazine, Pyrimidine oder α,β-ungesättigten aliphatischen Carbonsäuren.
   y den Vinylrest, den β-Sulfatoäthylrest, den β-Phosphatoäthylrest, den β-Thiosulfatoäthylrest. den β-Dimethylaminoäthyl- oder den β-Diäthylaminoäthylrest,
   R₁ Wasserstoff, Methyl, Carboxymethyl, Sulfomethyl, einen gegebenenfalls durch Cl, Br. OH Alkoxy mit 1 bis 2 C-Atomen, -COOH oder -SO₃H substituierten Alkylrest mit 2 bis 6 C-Atomen oder Phenyl, wobei der aromatische Kern durch CI, Alkyl und/oder Alkoxy mit 1 bis 2 C-Atomen, Alkanoylamino mit 1 bis 2 C-Atomen, ―COOH, ―CONH₂, -SO₂NH₂Oder - SO₃H substituiert sein kann,
   R₂ Wasserstoff, Methyl, Carboxymethyl, Sulfomethyl, einen gegebenenfalls durch Cl, Br, OH, Alkoxy mit 1 bis 2 C-Atomen, -COOH oder -S0₃H substituierten Alkylrest mit 2 bis 6 C-Atomen oder einen unsubstituierten Alkylrest mit 6 bis 20 C-Atomen,
   R₃ Methyl, Carboxy, Methoxycarbonyl oder Athoxycarbonyl,
   hal Chlor, Brom oder Fluor,
   X eine direkte Bindung oaer fur den Fall, daß D für Phenylen oder Naphthylen steht, auch Methylen oder Äthylen,
   k 1, 2 oder 3,
   g 0 oder 1,
   m 1, 2 oder 3.
   n 0 oder 1 und
   p 0 oder 1 bedeuten, wobei die Summe von k, g und m = 3 oder 4 und die Summe von n und p = 1 ist.

In den erfindungsgemäßen Phthalocyanin-Azofarbstoffen bedeuten insbesondere k = 2 oder 3, g = 0, m = 1 oder 2 und Pc den Rest eines Kupfer-, Kobalt- oder Nickelphthalocyanins.

Beispiel für Reste R₁ sind:
β-Hydroxyäthyl, β-Carboxyäthyl, β-Methoxyäthyl, γ-Carboxypropyl, o-Brom-butyl, Allyl, 4-Sulfophenyl, 2,5-Disulfophenyl, 3-Sulfo-4-methyl-phenyl, 4-Carbamoylphenyl;

Beispiele für Reste R₂ sind:
β-Hydroxyäthyl, ß-Carboxyäthyl, β-Methoxyäthyl, γ-Carboxypropyl, δ-Chlor-butyl, ω-Hydroxyhexyl, Stearyl.

Bei der Betrachtung des Restes D der Kupplungskomponente sind zwei Fälle zu unterscheiden:
1) Der Fall, daß p für 1 und n für 0 steht.
2) Der Fall, daß n für 1 und p für 0 steht.

Bevorzugte Reste D für den Fall, daß p = 1 ist, sind die gegebenenfalls substituierten Reste Phenyl, Naphthyl und

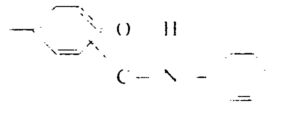

Beispiele für diese Reste sind:
3- oder 4-N-(3'- oder 4'-β-Sulfato-äthylsulfonyl-phenyl)-carbamoylphenyl,
2-Sulfo-4-β-Sulfatoäthyl-sulfonyl-phenyl, 3 oder 4 β-Sulfatoäthylsulfonyl-phenyl,
2-Sulfo-5-β-sulfatoäthylsulfonyl-phenyl, 2-Methyl-4-β-sulfatoäthylsulfonyl-phenyl,
2-Methoxy-4- oder -5β-sulfatoäthylsulfonyl-phenyl,
2-Carboxy-5-β-sulfatoäthylsulfonyl-phenyl,
2,5-Dimethoxy-4-β-sulfatoäthylsulfonyl-phenyl, 4-Vinyisulfonyl-phenyl,
4-ß-Phosphato-äthylsulfonyl-phenyl, 4-β-Thiosulfatoathylsulfonyl-phenyl,
4-β-Sulfatoäthylsulfonyl-naphthyl-1; 6-β-Sulfatoäthylsulfonyl-naphthyl-2;
8-Sulfo-6-β-sulfatoäthyfsulfonyl-naphthyl-2.

Besonders bevorzugt sind die durch eine β-Sulfatoäthylsulfonylgruppe substituierten Phenyl- oder Naphthylreste.

Bevorzugte Reste D für den Fall, daß n = 1 ist, sind die gegebenenfalls substituierten Reste Phenylen, Naphthylen und Stilben.

Beispiele für diese Reste sind:
Phenylen (1,4), Phenylen (1.3), 2-Sulfophenylen(1,4), 3-Sulfophenylen(1,4), 4- oder 5-Sulfopheny
len(1,3), 2-Carboxyphenylen(1,4), 6-Methoxyphenylen(1,3), 6-Carboxyphenylen(1,3), 6-Carboxy-4-sulfophenylen(1,3), 4.6-Dicarboxyphenylen(1,3), 6-Chlor-4-sulfophenylen(1,3), 2,6-Disulfopheny-len(1,4), 2,5-Disulfophenylen(1,4), 4,6-Disulfophenylen(1,3), 5-Sulfo-6-methylphenylen(1,3),
2-Methyl-5-carboxyphenylen(1,4), 3-Äthyl-6-sulfophenylen(1,4), 2,4,6-Trimethyl-5-sulfopheny-len(1,3), 4-Sulfonaphthylen(1,5), 4,8-Disulfonaphthylen(2,6), 1-Chlor-5-sulfonaphthylen(2,6),
2-Methyl-7-sulfonaphthylen(1,4), 2,2'-Disulfostilben(4,4').

Dabei steht die Pyrazolongruppe jeweils in 1-Stellung des Phenylkerns bzw. in 1- oder 2-Stellung des Naphthalinkerns.

Besonders bevorzugt sind die gegebenenfalls substituierten Reste Phenylen und insbesondere die Reste der Formeln:

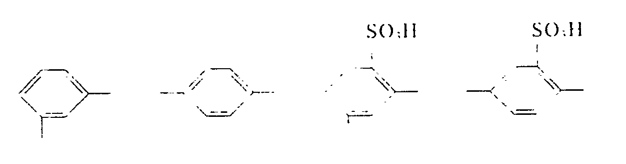

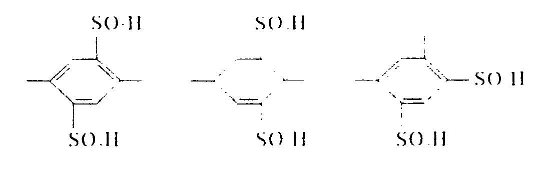

Besonders bevorzugt sind auch solche Farbstoffe der Formel I, die in D außer Carbon- und/oder Sulfonsäureestern keine weiteren Substituenten enthalten

Bevorzugte Reste D' sind die oben bei D für n = 1 genannten

Für B stehende aliphatische Reste sind insbesondere unsubstituierte Reste mit 2-6 C-Atomen Beispiele für diese Reste sind:
Äthylen, Trimethylen, Tetramethylen, Hexamethylen.

Bevorzugte aromatische Reste, die für B stehen können, sind die oben bei D für n = 1 genannten Bevorzugte Reste, die für R₁ und R₂ stehen, sind Wasserstoff. Methyl und Äthyl Besonders bevorzugt ist der Wasserstoff.

Die erfindungsgemäße Herstellung der Farbstoffe der Formel I erfolgt durch Azokupplung, durch Acylierung für den Fall, daß n = 1 ist, oder durch Kondensation zweier Teilstücke für den Fall, daß A nicht für einen Dihalogentriazinrest steht Die Azokupplung ist bevorzugt für den Fall, daß p = 1 ist. und die Acylierung für den Fall, daß n = 1 ist

Bei der Herstellung durch Azokupplung wird ein Mol eines Amins der Formel II 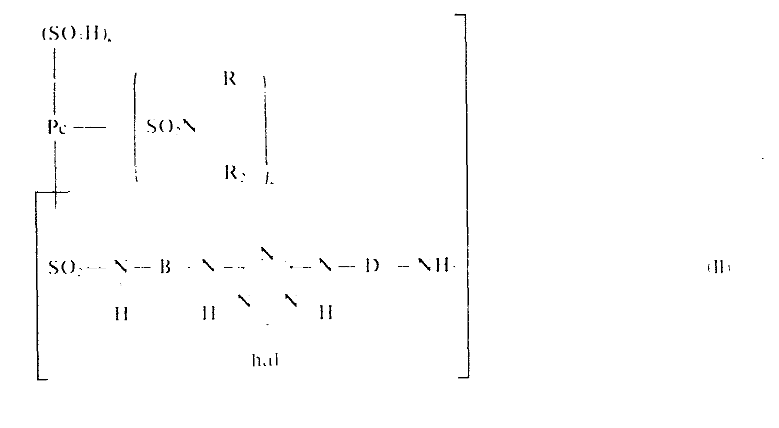 in der Pc, B, D', R₁, R₂, hal, k, g und m die oben angegebene Bedeutung haben, diazotiert und auf m Mole eines Pyrazolons der allgemeinen Formel III 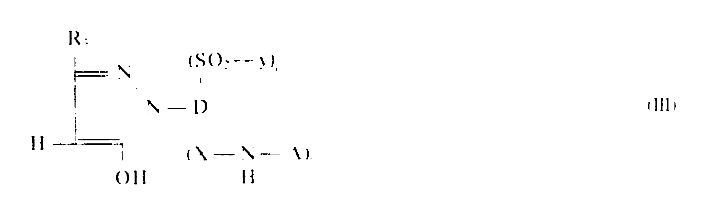 in der D, A, X, y, R₃. p und n die oben angegebene Bedeutung haben, gekuppelt Bei der Herstellung durch Acylierung wird ein Mol des Farbstoffs der allgemeinen Formel la 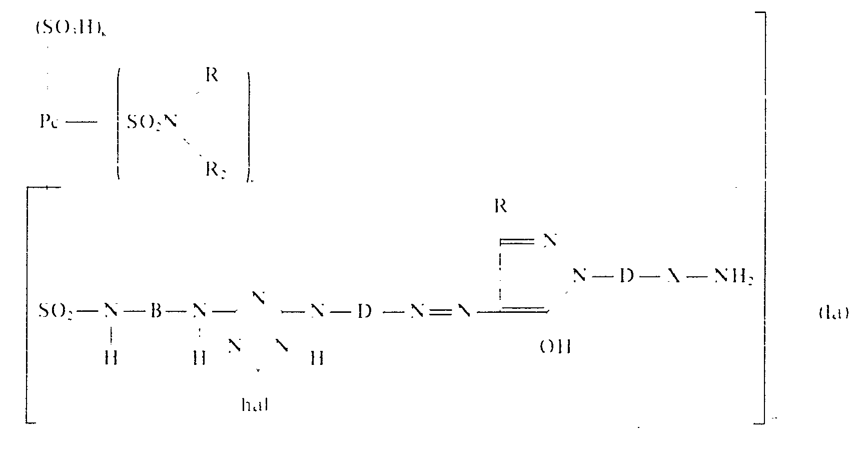 worin Pc, B, D', R₁, R₂, R₃, hal, D, X, k, g und m die oben angegebene Bedeutung haben, mit m Molen eines Chlorids der Formel IV 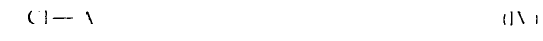 in der A die oben angegebene Bedeutung hat, acyliert

Bei der Herstellung durch Kondensationsreaktion können die Farbstoffe entsprechend dem folgenden Schema Ib aus den zwei rechts und links der gestrichelten Trennlinien liegenden Teilstücken a und b₁, von denen das eine eine (―N―H-Gruppe),das andere einen Dihalogentriazinrest enthält, unter Abspaltung von hal-H erhalten werden. Dabei haben Pc, B, D', D, A, R₁, R₂, R₃, k, g, m, n und p die oben angegebene Bedeutung mit der Ausnahme, daß A nicht die Bedeutung eines Dihalogentriazinrestes hat

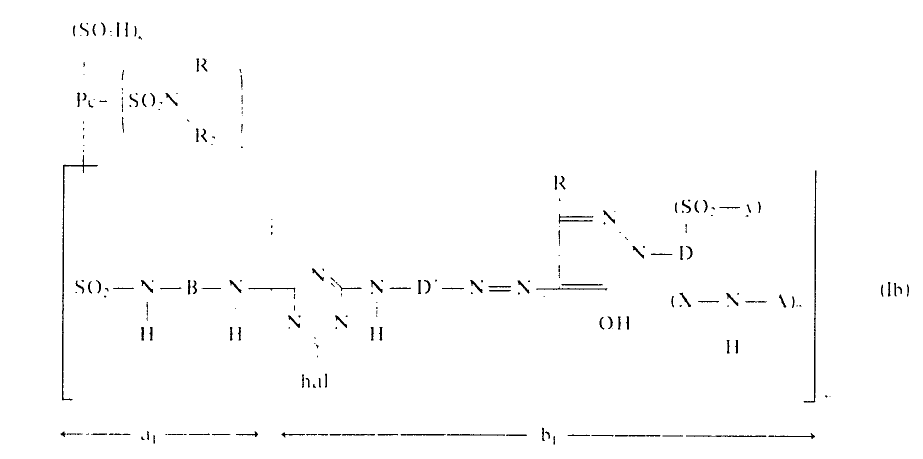

Bei der Herstellung der erfindungsgemäßen Farbstoffe durch Kondensation aus den Teilstücken a· und b₁ werden m Mole eines dihalogentriazinhaltigen Azofarbstoffs der allgemeinen Formel V 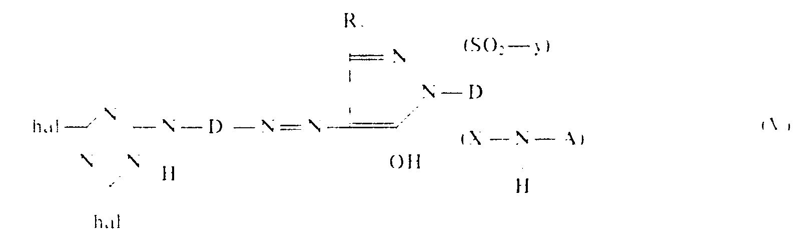 in der D`, D, A, R₃, hal, X, n und p die oben angegebene Bedeutung haben mit der Ausnahme. daß A nicht für den Rest eines Dihalogentriazins steht, mit einem Mol eines Phthalocyaninderivats der Formel VI kondensiert. 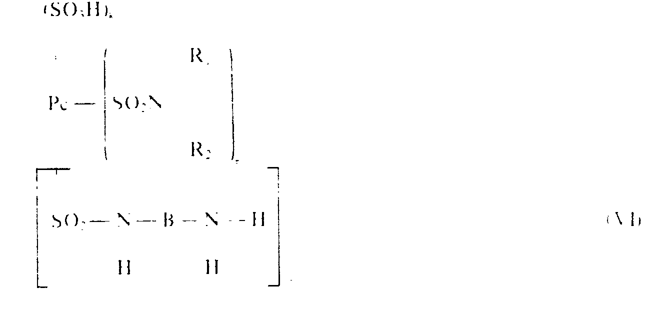 worin Pc, B, R₁, R₂, k, g und m die oben angegebene Bedeutung haben

Das zur Herstellung der erfindungsgemäßen Farbstoffe durch Azokupplung benötigte Amin der Formel II wird in drei an sich bekannten Reaktionsschritten hergestellt.

Der erste Schritt erfolgt, für den Fall, daß g für 0 steht, durch Umsetzung von Phthalocyanin-3-oder-4-di-, tri- oder bevorzugt tetrasulfochloriden mit Aminen der allgemeinen Formel VII 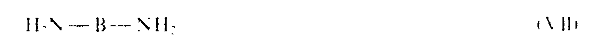 worin B die oben angegebene Bedeutung hat Anstelle der Amine der Formel VII können auch mono-acylierte Amine, z. B. acetylierte Amine der Formel Vlla 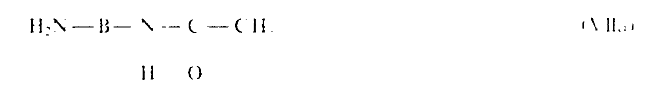 eingesetzt werden In diesem Fall wird das entstandene Kondensationsprodukt mit Phthalocyamnsulfochlorid anschließend verseift.

Steht g in Formel I bzw. VI für die Zahl 1, so wird zur Gewinnung der Amine der Formel VI das Phthalocyanin-3- oder -4-sulfochlorid in beliebiger Reihenfolge mit einem Amin der allgemeinen Formel VIII 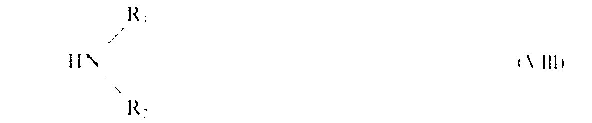 in der R1 und R2 die oben angegebenen Bedeutungen haben, und mit einem Amin der Formel VII oder mit einer Mischung der beiden Amine umgesetzt

Das entstandene Kondensationsprodukt entspricht der allgemeinen Formel VI

Derartige Reaktionen sind z B. beschrieben in DAS 1 769 398 und DAS 1 289 206

Es ist möglich, die Amine der Formel VI direkt in der wäßrigen Lösung, m der sie anfallen, weiterzuverarbeiten, jedoch ist es in aller Regel vorteilhaft, sie zu isolieren, um sie von einem eventuell noch vorliegenden Anteil an nicht umgesetztem Amin der Formel VII und/oder VIII zu befreien

Als Amine der Formel VIII die zur Herstellung der Amine der Formel VI verwendet werden können, seien die folgenden genannt:
Ammoniak, Methylamin, Dimethylamin, Äthylamin, Diäthylamin, β-Hydroxyäthylamin, β-Methoxy- äthylamin, Bis-(β-hydroxyäthyl-)amin, Aminoessigsäure, Butylamin, Caprylamin, Laurylamin, Anilin, Toluidin, Chloranilin, Anilin o-, m- oder p-sulfonsäure, Anilin o-, m- oder p-carbonsäure, N-Methylanilin, N-Äthylanilin, o-, m- oder p-sulfonsäure, Anilin-w-methan-sulfonsäure, Benzylamin, Taurin, N-Methyltaurin, β-Acetylamino-äthylamin.

Als Beispiele für Amine der Formel VII, die auch in Form der mono-Acylverbindung eingesetzt werden können, seien die folgenden genannt:
Äthylendiamin
m- oder p-Phenylendiamin
1,4-Phenylendiamin-2-sulfonsäure
1,4-Phenylendiamin-2,5- oder 2,6-disulfonsäure
1,3-Phenylendiamin-4-sulfonsäure
2,4-Diamino-toluol-5- oder 6-sulfonsäure
2,5-Diamino-1,3,5-trimethylbenzol-4-sulfonsäure
2,4-Diamino-1-chlorbenzol-6-sulfonsäure
1,5-Diaminonaphthalin-2-sulfonsäure
1,4-Diaminonaphthalin-2-sulfonsäure
2,6-Diaminonaphthalin-8-sulfonsäure
2,6-Diaminonaphthalin-4,8-disulfonsäure
1,5-Diaminonaphthalin-3,7-disulfonsäure
1,4-Diaminonaphthalin-2-carbonsäure
4,4'-Diaminodiphenyl-2,2'-disulfonsäure
1 -Amino-4-aminomethyl-benzol-3-sutfonsäure
4,4'-Diaminostilben-2,2'-disulfonsäure

Der zweite Schritt zur Herstellung des Amins der allgemeinen Formel II ist die Kondensation des Amins der Formel VI mit Trifluortriazin, Tribromtriazin oder bevorzugt Trichlortriazin zu dem Phthalocyaninderivat der Formel IX: 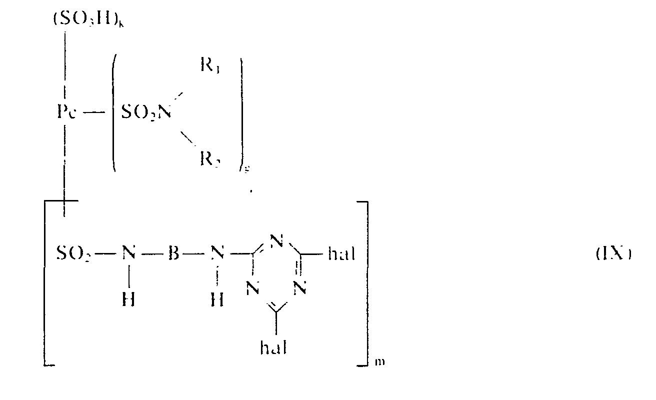 in der Pc, B, hal, k, g und m die oben angegebene Bedeutung haben. Derartige Kondensationsreaktionen sind bekannt.

Sie werden in Wasser oder Mischungen aus Wasser und einem organischen Lösungsmittel, z. B. Aceton, durchgeführt bei Temperaturen zwischen 0⁰ und 10°C und bei pH-Werten zwischen 4 und 8. Die frei werdende Halogenwasserstoffsäure wird durch Zugabe von Alkali wie z. B. Natriumbicarbonat, Soda oder Natronlauge neutralisiert. Die so erhaltene Lösung wird zweckmäßigerweise direkt weiterverarbeitet, jedoch kann das Produkt der Formel IX gewünschtenfalls auch isoliert werden.

Der dritte Schritt zur Herstellung des Amins der Formel II ist die Kondensation des Phthalocyaninderivats der Formel IX mit einem Diamin der Formel X 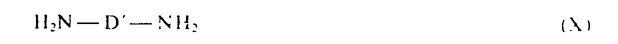 in der D' die oben angegebene Bedeutung hat.

Anstelle des Diamins der Formel X kann auch ein nitrogruppenhaltiges Amin der Formel Xa 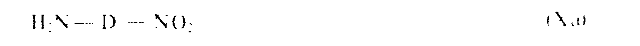 in der D' die oben angegebene Bedeutung hat, eingesetzt werden, wobei dann im Anschluß an die Kondensation die Nitrogruppe in üblicher Weise, z B durch Reduktion mit Natriumsulfh^{y}drat. zur Aminogruppe reduziert wird. Auch diese Kondensationsreaktion ist an sich bekannt Sie wird unter den oben genannten Bedingungen, jedoch bei leicht erhöhter Temperatur etwa bei 20-55 C. vorzugsweise 30 bis 45- C durchgeführt.

Als Beispiele für Amine der Formel X, die auch in Form der nitrogruppen-haltigen Verbindung Xa eingesetzt werden können, seien die folgenden genannt:
p-Phenylendiamin
m-Phenylendiamin
1,4-Phenylendiamin-2-sulfonsäure
1,4-Phenylendiamin-2,5- oder 2,6-disulfonsäure
1,3-Phenylendiamin-4-sulfonsäure
1,3-Phenylendiamin-4,6-disulfonsäure
2,4-Diamino-toluol-5- oder 6-sulfonsäure
2,6-Diamino-toluol-4-sulfonsäure
2,5-Diamino-1,3,5-trimethylbenzol-4-sulfonsäure
2,6-Diamino-1,3-diäthylbenzol-4-sulfonsäure
2,4-Diamino-1-chlorbenzol-fi-sulfonsäure
4,4'-Diaminodiphenyl-2,2'disulfonsäure
4-Nitro-anilin
4-Nitro-2-sulfo-anilin
2,4-Diaminonaphthalin-5 sulfonsäure
1,5-Diaminonaphthalin-2-sulfonsäure
1,4-Diaminonaphthalin-2-sulfonsäure
2,6-Diaminonaphthalin-8-sulfonsäure
2,6-Diaminonaphthalin-4,8-disulfonsäure
1,5-Diaminonaphthalin-3,7-disulfonsäure
1,4-Diaminonaphthalin-2-carbonsäure
4,4'Diaminostilben-2,2'-disulfonsäure

Die Diazotierung der Amine der Formel II erfolgt in an sich bekannter Weise in wäßrigem Medium durch Umsetzung mit 1 Mol salpetriger Säure bzw eines salpetrige Säure abspaltenden Agens in Gegenwart von mindestens 2 Äquivalenten, vorzugsweise ca. 2,5 Äquivalenten einer starken Saure bezogen auf 1 Mol des Amins Als salpetrige Säure abspaltendes Agens wird m mineralsaurem Medium im allgemeinen ein Salz der salpetrigen Säure, insbesondere ein Alkalisalz wie Natrium oder Kaliumnitrit eingesetzt.

Bei den Pyrazolonen der Formel III steht in 3-Stellung der Substituent R₃ und im Falle der Bedeutung von n = 1 in 1-Stellung der Substituent 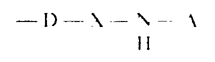 Beispiele dieser Substituenten sind in der folgenden Tabelle angegeben:

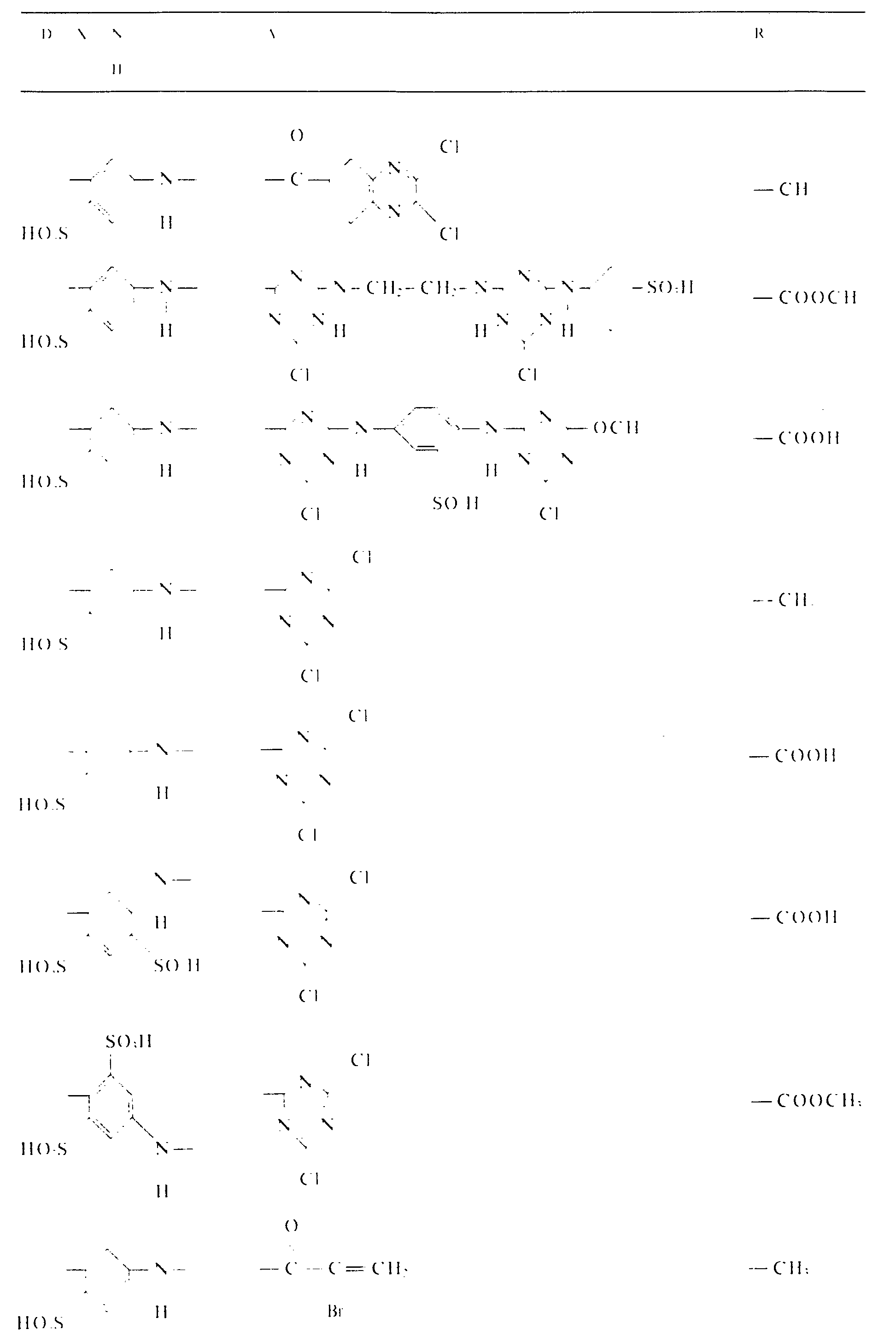

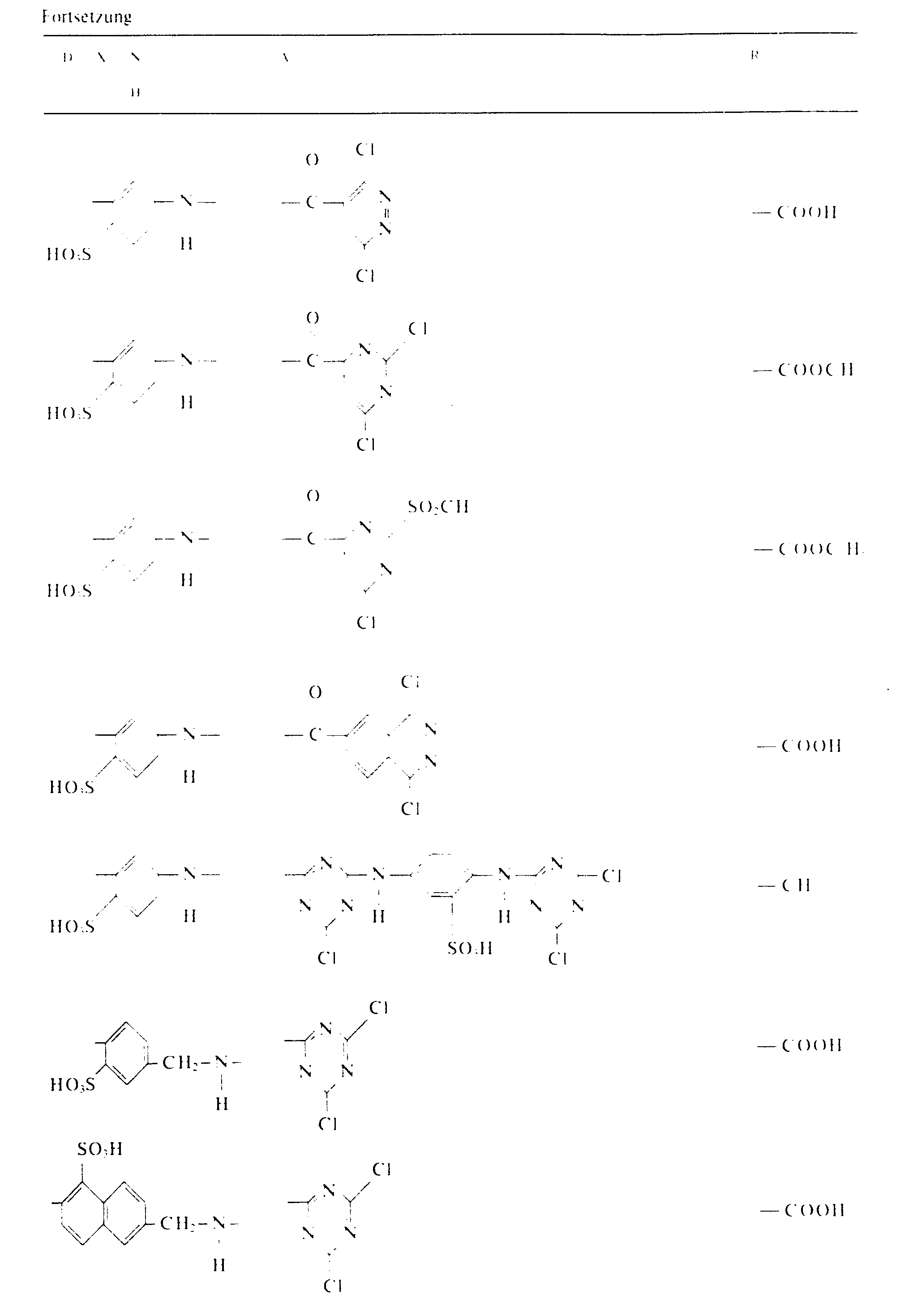

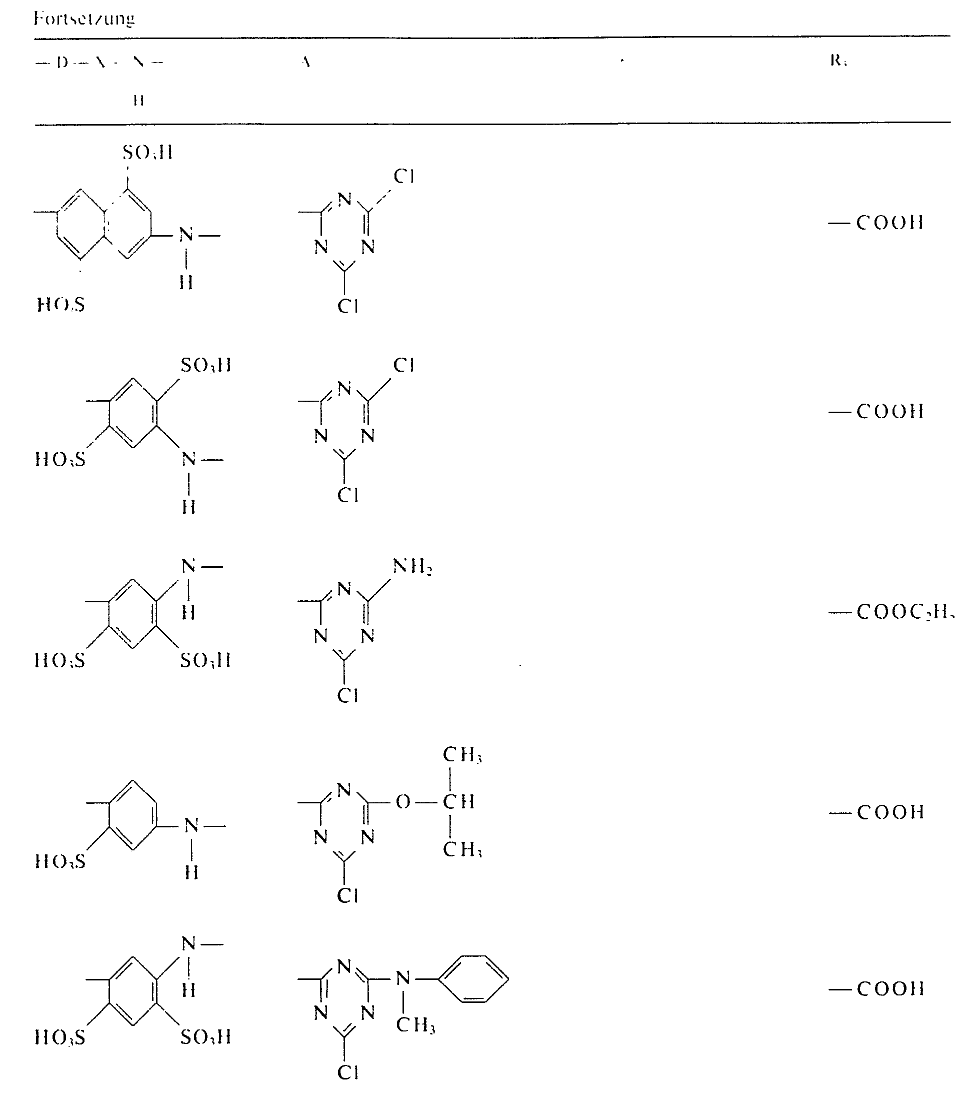

Die Pyrazolone der Formel III können bei n = 1 in an sich bekannter Weise hergestellt werden durch Acylierung von Aminophenylpyrazolonen der Formel IIIa

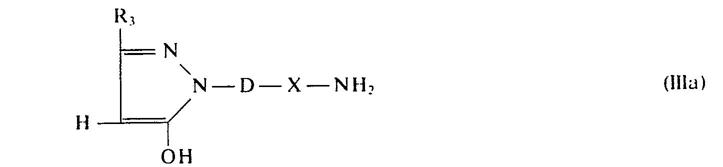

in der D, X und R₃ die oben angegebene Bedeutung haben, mit Acylierungsmitteln der Formel IV. Beispiele für Aminophenylpyrazolone der Formel IIIa, die zu Pyrazolonen der Formel III führen, sind:
1-(3-Aminophenyl)-pyrazolon-(5)-3-carbonsäure
1-(4-Aminophenyl)-pyrazolon-(5)-3-carbonsäure
1-(2-Sulfo-5-aminophenyl)-pyrazolon-(5)-3-carbonsäure
1-(2-Sulfo-4-aminophenyl)-pyrazolon-(5)-3-carbonsäure
1-(2-Methyl-3-amino-5-sulfophenyl)-pyrazolon-(5)-3-carbonsäure
1-(2-Methyl-3-sulfo-5-aminophenyl)-pyrazolon-(5)-3-carbonsäure
1-(2-Sulfo-4-aminophenyl)-3-methyl-pvrazolon-(5)
1-(2-Sulfo-5-aminophenyl)-3-methyl-pyrazolon-(5)
1-(3-Aminophenyl)-3-methyl-pyrazolon-5
1-(2.5-Disulfo-4-aminophenyl)-pyrazolon-(5)-3-carbonsäure
1-(2,6-Disulfo-4-aminophenyl)-pyrazolon-(5)-3-carbonsäure
1-(2,6-Disulfo-4-aminophenyl)-pyrazolon-(5)-3-carbonsäuremethylester
1-(4'-Amino-2,2')disulfo-stilben-4)-pyrazolon-(5)-3-carbonsäure
1-(4'-Amino-2,2'-disulfo-stilben-4)-3-methyl-pyrazolon-(5)

Acylierungsmittel der Formel IV, die zur Herstellung der Pyrazolone der Formel III verwendet werden können, sind in der Literatur in großer Zahl beschrieben. Ein Überblick ist gegeben in »K. Venkataraman: The Chemistry cf Synthetic Dyes«, Band VI, S. 4-182, Academic Press 1972.

Die wichtigsten derartigen Acylierungsmittel gehören zur Klasse der Triazine, Chmoxaline. Phthalazine, Pyridazine, Pyrimidine oder der α,β-ungesättigten aliphatischen Karbonsäuren Im folgenden seinen die wichtigsten Individuen stellvertretend für die gesamte Klasse genannt
Cyanurchlorid und Cyanurbromid. Cyanurfluorid, Dihalogenmono-amino-triazine, wobei die Aminogruppe als nichtreaktiver Substituent analog dem oben beschriebenen Schema substituiert sein kann, wie 2,6-Dichlor-4-amino-triazin, 2,6-Dichlor-4-methylamino-triazin, 2,6-Dichlor-4-ox- äthylaminotriazin, 2,6-Dichlor-4-phenylaminotriazin, 2,6-Dichlor-4-(o-, m- oder p-sulfophenyl)-aminotriazin, 2,6-Dichlor-4-(-2, 4-, oder -2,5-disulfophenyl)-aminotriazin, Dihalogen-alkoxy- und -aryloxy-sym-triazine, wie 2,6-Dichlor-4-methoxytriazin, 2,6-Dichlor-4-i-propoxytriazin, 2.6-Dichlor-4-phenoxytriazin, Tetrahalogenpyrimidine, wie Tetrachlor-, Tetrabrom- oder Tetrafluor-pyrimidin, 2,4,6-Trihalogen-pyrimidine, wie 2,4,6-Trichlor-, Tribom- oder -Trifluorpyrimidin, 2,4,6-Trichlor-5-nitro- oder -5-methyl- oder -5-carbomethoxy- oder -5-cyano-pyrimidin, 2,6-Difluor-4-methyl-5-chlorpyrimidin, 2,4-Difluor-pyrimidin-5-äthylsulfon, 2,6-Difluor-4-chlorpyrimidin, 2,4,6-Trifluor-5-chlorpyrimidin, 4,6-Difluor-2,5-dichlor- oder -dibrompyrimidin, 2-Methylsulfonyl-4,5-chlor-6-methylpyrimidin, 2,6-Bis-methylsulfonyl-4,5-dichlorpyrimidin. 2-Methylsulfonyl-4,5-dichlor-6-methylpyrimidin, 2-Äthylsulfonyl-4,6-dichlorpyrimidm, Derivate heterocyclischer Carbon- oder Sulfonsäuren wie 3,6-Dichlorpyridazin-4-carbonsäurechlorid. 2,4-Dichlorpyrimidin-5-carbonsäurechlorid, 2,4,6-Trichlorpyrimidin-5-carbonsäurechlorid, 2-Methyl-4-chlorpyrimidin-5-carbonsäurechlorid, 2-Chlor-4-methylpyrimidin-5-carbonsäurechlorid, 2,6-Dichlorpyrimidin-4-carbonsäurechlorid, 2-Methylsulfonyl-6-chlorpyrimidin-4- oder 5-carbonsäurechlorid, 2-Äthylsulfonyl-6-chlorpyrimidin-4- oder -5-carbonsäurechlorid, 2,6-Bis-(methylsulfonyl)-pyrimidin-4-carbonsäurechlorid, 2-Methylsulfonyl-6-methyl-4-chlor- oder -4-brompyrimi- din-5-carbonsäurechlorid oder -bromid. 2.6-Bis-(methylsulfonyl)-4-chlorpyrimrdin-5-carbonsäurechlorid, 2- oder 3-Monochlorchinoxalin-6-carbonsäurechlorid oder -6-sulfonsäurechlorid, 2-oder 3-Monobromchinoxalin-6-carbonsäurebromid ooer -6-sulfonsäurebromid. 2,3-Dichlorchino- xalin-6-carbonsäurechlorid oder -6-sulfonsäurechlorid, 2,3-Dibromchinoxalin-6-carbonsäurebro- mid oder -6-sulfonsäurebromid, 1,4-Dichlorphthalazin-6-carbonsäurechlorid oder -6-sulfonsäurechlorid sowie die entsprechenden Bromverbindungen. 2,4-Dichlorchinazolin-6- oder -7-carbonsäurechlorid oder -sulfonsäurechlorid sowie die entsprechenden Bromverbindungen. N-Methyl-N-(2,4-dichlortriazinyl-6)-aminoacetylchlorid, 2-Chlorbenzthiazol-5- oder -6-carbonsäurechlorid oder -5- oder -6-sulfonsäurechlorid und die entsprechenden Bromverbindungen 2-Methylsulfonyl-oder 2-Äthylsulfonyl- oder 2-Phenylsulfonylbenzthiazol-5- oder -6-sulfonsäurechlorid, aliphatische Reaktivkomponenten wie Acrylsäurechlorid, Mono-, Di- oder Trichloracrylsäurechlond, 3-Chlorpropionsäurechlorid, 3-Phenylsulfonyl-propionsäurechlorid, 3-Methylsulfonyl-propionsäurechlorid, 3-Äthylsulfonyl-propionsäurechlorid, 3-Chloräthansulfochlorid, α-Methylsulfonylacryl- säurechlorid und α-Bromacrylsäurechlorid.

Die Acylierung der Aminophenylpyrazolone der Formel Illa mit den Verbindungen der Formel IV erfolgt in an sich bekannter Weise in wäßrigem, wäßrig-organischem oder organischem Lösungsmittel nach Art einer Schotten-Baumann-Reaktion, bei Temperaturen zwischen 0 und 80 C. bevorzugt zwischen 10 und 25'C, wobei man zweckmäßigerweise die frei werdende Säure durch Zusatz von Alkali, wie z. B. Natriumbicarbonat. Soda, Natronlauge oder Natriumacetat neutralisiert bzw. abpuffert- Als organische Lösungsmittel kommen vor allem Aceton, Chlorkohlenwasserstoffe wie Äthylenchlorid oder Chlorbenzol oder auch aprotische polare Lösungsmittel wie Dimethylformamid in Betracht.

Beispiele geeigneter Pyrazolone der Formel III mit der Bedeutung von p = 1 sind
1-(4-β Sulfatoäthylsulfony-phenyl)-pyrazolon-(5) 3-carbonsäure
1-(4-β-Sulfatoäthylsulfonyl-phenyl)-pyrazolon-(5)-3-carbonsäuremethylester
1-(4-β-Sulfatoäthylsulfonyl-phenyl)-pyrazolen-(5)-3-carbonsäureäthylester
1-(4-β-Sulfatoäthylsulfonyl-phenyl)-3-methyl-pyrazolon-5
1-(3-β-Sulfatoäthylsulfonyl-phenyl)-3-methyl-pyrazolon-5
1-(3-β-Sulfatoäthylsulfonyl-phenyl)-pyrazolon-(5)-3-carbonsäure
1-(2-Sulfo-4-β-sulfatoäthylsulfonyl)-phenyl)-pyrazolon (5)-3 carbonsäure
1-(8-Sulfo-6-β-sulfatoäthylsulfonyl-naphthyl-(2))- pyrazolon-3-carbonsäure
1-(4-β-Thiosulfatoäthylsulfonyl)-phenyl-pyrazolon-(5)-3-carbonsäure

Wird die Diazoniumverbindung eines Amins der Formel auf ein Pvrazolon der Formel III gekuppelt, so ist nach Ablauf der Kupplungsreaktion eine der erfindungsgemaßer. Herstellungen der wasserlöslichen faserreaktiven Phthalocyanin-Azofarbstoffe beendet

Aus den so erhaltenen wäßrigen Lösungen der Phthalocyanin-Azofarbstoffe kann der Farbstoff dann durch Aussalzen isoliert werden, oder er kann in Form eines festen Farbstoffpräparats durch Sprühtrocknung der Lösungen erhalten werden

Wie bereits dargestellt, können die erfindungsgemäßen Farbstoffe der Formel I, für den Fall, daß n = 1 ist, außer durch Azokupplung auch durch Acylierung der Farbstoffe der Formel la mit Chloriden der Formel IV hergestellt werden

Beispiele für Acylierungsmittel der Formel IV sind bereits oben bei der Herstellung der Pyrazolone der Formel III mit der Bedeutung von n=1 gegeben Entsprechendes gilt für die Bedingungen der Acylierung

Die Farbstoffe der Formel la werden hergestellt durch Kupplung eines diazotierten Amins der Formel auf ein Pyrazolon der Formel lila Beispiele für Pyrazolone der Formel IIIa sind oben gegeben

Auch aus den durch Acylierungsreaktionen erhaltenen wäßrigen Lösungen kann der Farbstoff durch Aussalzen isoliert oder durch Sprühtrocknung in ein festes Farbstoffpräparat überführt werden

Wie des weiteren bereits dargestellt, können die erfindungsgemäßen Farbstoffe entsprechend dem oben angegebenen Schema Ib durch Kondensation eines Amins der Formel VI mit einem einen Dihalogentriazinrest enthaltenden Azofarbstoff der Formel V bei Temperaturen von 30-60 C und pH-Werten von 5- 9 hergestellt werden

Die Herstellung des Amins der Formel VI ist oben bereits im einzelnen dargestellt als erster Reaktionsschritt zur Herstellung des Amins der Formel II

Zur Herstellung der Azofarbstoffe der Formel IV wird ein Amin der Formel 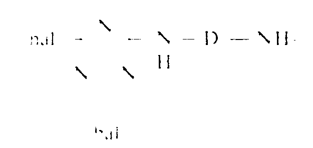 in der hal und D die oben angegebenen Bedeutungen haben, diazotiert und auf ein Pyrazolon der Formel III gekuppelt

Als Beispiele derartiger Amine seien genannt die Kondensationsprodukte aus
1 Mol Trichlortriazin und
1 Mol 1,3-Diaminobenzol-4-sulfonsäure bzw
1 Mol 1,4-Diaminobenzol-3-sulfonsäure bzw
1 Mol 1,4-Diaminobenzol-3,5- oder 3,6-disulfonsäure bzw.
1 Mol 4,4'-Diaminodiphenyl-2.2 -disulfonsäure
ferner die Kondensationsprodukte aus 1 Mol Tribromtriazin und
1 Mol 1,3-Diaminobenzol-4-sulfonsäure bzw
1 Mol 1,4-Diaminobenzol-3-sulfonsäure
sowie die Kondensationsprodukte aus 1 Mol Trifluortriazin und
1 Mol 1,3-Diaminobenzol-4,6-disulfonsäure bzw
1 Mol 4,4'-Diaminostilben-2,2 -disulfonsäure

Auch aus den durch Kondensationsreaktionen erhaltenen wäßrigen Lösungen kann der Farbstoff durch Aussalzen isoliert oder durch Sprühtrocknung in ein festes Farbstoffpräparat überführt werden

Die erfindungsgemäßen wasserlöslichen faserreaktiven Farbstoffe sind hervorragend geeignet zum Färben und Bedrucken von Materialien faseriger Struktur, insbesondere von Wolle, Polyamid, Zellulose oder zellulosehaltigen Materialien

Die erfindungsgemäßen Farbstoffe, die in der Diazokomponente D einen zusätzlichen reaktiven Rest enthalten, sind besonders bevorzugt Sie zeichnen sich durch eine hohe Fixierausbeute insbesondere bei Druckverfahren und Fixierung durch Trockenhitze und gute Auswaschbarkeit des nicht fixierten Farbstoffanteils aus und liefern gelb- bis blaustichig grüne Färbungen und Drucke von hoher Brillanz und Farbstärke mit sehr guter Lichtechtheit. guten Naßechtheiten wie Wäsche 60 C. 95 C und Perboratwäsche, Seewasserechtheit, Schweißechthert sauer und alkalisch, Chlorbadewasserecht heit. Peroxidechtheit. Rauchgasechtheit

Auch Gemische erfindungsgemäßer Farbstoffe, insbesondere solche, in denen die Bedeutungen von k und/oder g und/oder m in den Einzelkomponenten verschieden sind, sind zum Farben und Bedrucken von Zellulosematerialien hervorragend geeignet und weisen dieselben vorteilhaften Eigenschaften auf wie die Einzelfarbstoffe

In den folgenden Ausfuhrungsbeispielen sind die Temperaturen in C angegeben worden

### Beispiel 1

1060 g 3-[(3-Amino-4·sulfo-phenyl)-amino-sulfonyl-]nickelphthalocyanin-3',3 ,3' -trisulfonsaure hergestellt in üblicher Weise durch Kondensation von Nickelphthalocyanintetrasulfochlorid mit 1,3-Diaminobenzol-4-sultonsäure, werden mit 7000 rnl Wasser verrührt und durch Zugabe von 400 ml 10n Natronlauge gelöst

Zu dieser Lösung gibt man bei 0-5-C 190 g Cyanurchlorid, gelöst in Aceton, und hält gleichzeitig mit etwa 100 ml 10n Natronlauge den pH-Wert zwischen 6 und 7. Wenn keine freien Aminogruppen mehr nachweisbar sind, wird die neutrale Lösung mit einer neutralen Lösung von 195 g m-Phenylendiamin sulfonsäure in etwa 3000 ml Wasser versetzt und auf etwa 45 erwärmt. Gleichzeitig hält man mit weiteren 100 ml 10n Natronlauge den pH-Wert zwischen 6 und 7. Wenn der pH-Wert konstant bleibt. ist die Reaktion beendet und nicht umgesetzte Metaminsäure läßt sich in einem Chromatogramm nur noch spurenweise nachweisen Das entstandene Amin entspricht der allgemeinen Formel II Es wird durch Zugabe von Steinsalz abgeschieder und durch Waschen mit 20%igem Salzwasser von eventuell nicht umgesetzter Metaminsäure befreit.

Es wird dann erneut mit etwa 8000 ml Wasser neutral gelöst, mit 72 g Natriumnitrit versetzt und m eine Mischung aus 300 ml 10n Salzsäure und 2000 g Eis bei 0-5 C eingerührt.

Nach kurzer Zeit wird ein eventueller Überschuß von Nitrit durch Zugabe von Aminosulfosäure zerstört Die so erhaltene Diazosuspension gibt man dann zu einer neutralen Lösung von 299 g 1-(2-Sulfo-4-aminophenyl)-pyrazolon-(5)-3-carbonsäure in 3000 ml Wasser, der zuvor 100 g Natriumbikarbonat zugesetzt wurden Die Kupplung ist in kurzer Zeit beendet Der entstandene Farbstoff entspricht der allgemeinen Formel la Es wird durch Zugabe von 2600 g Steinsalz abgeschieden und dann erneut mit etwa 10 000 ml Wasser neutral gelöst

Zu dieser Lösung gibt man bei 0-5 C 190 g Cyanurchlorid, gelöst in 500 ml Aceton und halt gleichzeitig mit etwa 55 g Soda einen pH-Wert von 5-7 ein. Wenn keine freien Aminogruppen mehr nachweisbar sind, ist die Acylierung beendet Der Farbstoff kann durch Sprühtrocknung oder durch Aussalzen isoliert werden

Ersetzt man bei der Herstellung der Diazokomponente das Cyanurchlorid durch molare Mengen von Cyanurbromid oder Cyanurfluorid, und verfahrt im übrigen wie oben beschrieben, so erhalt man ebenfalls wertvolle grüne Reaktivfarbstoffe

Ersetzt man die 1,3-Diaminobenzolsulfonsäure bei der Kondensationsreaktion mit der 3-[3-(Dichlor triazinylamino)-4-sulfo-phenyl]-amino-suffonyl-Ni-Pc-3 ,3",3'"-trisulfonsäure durch eines der im folgenden genannten Amine, so erhält man ebenfalls wertvolle Phthalocyaninazofarbstoffe
1,4-Phenylendiamin-2-sulfonsäure
1,3-Phenylendiamin-4,6-disulfonsäure
1,4-Phenylendiamin-2,5-disulfonsäure
1,4-Phenylendiamin-2,6-disulfonsäure
2,4-Diaminotoluol-6-sulfonsäure
2,6-Diaminotoluol-4-sulfonsäure
2,4-Diamino-1,3,5-trimethylbenzol-6-sulfonsäure
2,6-Diaminonaphthalin-4,8-disulfonsäure
1,5-Diaminonaphthalin-2-sulfonsäure
2,6-Diaminonaphthalin-8-sulfonsäure
4,4'-Diaminostilbendisulfonsäure-2,2'
4,4'-Aminobenzoylamino-2-sulfo-anilin

Ersetzt man bei der Acylierung des Aminogruppen-haltigen Phthalocyaninazofarbstoffes das Cyanurchlorid durch eine molare Menge eines der folgenden Acylierungsmittel und verfährt im übrigen wie oben beschrieben, so erhält man ebenfalls wertvolle grüne Reaktivfarbstoffe
β-Chlorpropionsäurechlorid
α,β-Dibrompropionsäurechlorid
Kondensationsprodukt aus 1 Mol Cyanurchlorid und
1 Mol 2-(3-Amino-4-sulfo-phenyl)-amino-4-(4-sulfo-phenyl)-amino-6-chlor-s-triazin
Acrylsäurechlorid
α-Bromacrylsäurechlorid
3-β-Chloräthylsulfonylbenzoesäurechlorid
Kondensationsprodukt aus Cyanurchlorid und
Bis-[β-(β-chloräthyl)-sulfonyläthyl]-amin (Molverhältnis 1 : 1)
ω-(β-Chloräthylsulfonyl)-buttersäurechlorid
2,4-Dichlor-pyrimidin-5-carbonsäurechlorid
2,4-Dibrom-pyrimidin-5-carbonsäurebromid
2,4-Difluor-pyrimidin-5-carbonsäurechlorid
2,6-Dichlor-pyrimidin-4-carbonsäurechlorid
2,3-Dichlorchinoxalin-6-carbonsäurechlorid
2,3-Dichlorchinoxalin-6-sulfonsäurechlorid
1,4-Dichlor-phthalazin-6-sulfonsäurechlorid
1,4-Dichlor-phthalazin-6-carbonsäurechlorid
2-Methylsulfonyl-6-chlor-pyrimidin-4-carbonsäurechlorid
3,6-Dichlorpyridazin-4-carbonsäurechlorid
2,4,6-Tribrom-1,3,5-triazin
2.4,6-Trifluor-1,3,5-triazin
2,4,6-Trisulfo-1,3,5-triazin
2,4-Disulfo-6-chlor-1,3,5-triazin
2-Amino-4,6-dichlor-1,3,5-triazin
2-Methylamino-4,6-dichlor-1,3,5-triazin
2-Phenylamino-4,6-dichlor-1,3,5-triazin
2-(2-Methyl-phenyl)-amino-4,6-dichlor-s-triazin
2-(2-Methyl-4-sulfophenyl)-amino-4,6-dichlor-s-triazin
2-(2-Carboxy-4-sulfophenyl)-amino-4,6-dichlor-s-triazin
2-(2-Sulfophenyl)-amino-4,6-dichlor-s-triazin
2-(3-Sulfophenyl)-amino-4,6-dichlor-s-triazin
2-(4-Sulfophenyl)-amino-4,6-dichlor-s-triazin
2-Methoxy-4,6-dichlor-s-triazin
2-Äthoxy-4,6-dichlor-s-triazin
2-i-Propoxy-4,6-dichlor-s-triazin
2-Phenoxy-4,6-dichlor-s-triazin
2-N-Methyl-N-phenylamino-4,6-dichlor-s-triazin
2-Butylmercapto-4,6-dichlor-s-triazin
2-β-Methoxyäthoxy-4,6-dichlor-s-triazin
2-(2-Carboxyphenoxy)-4,6-dichlor-s-triazin
Kondensationsprodukt aus Cyanurchlorid und
4-Aminophenyl-β-sulfatoäthylsulfon (Molverhältnis 1 : 1)
Kondensationsprodukt aus 1 Mol Cyanurchlorid und
1 Mol 2-β-Amino-äthylamino-4-(2,5-disulfophenylamino)-6-chlor-s-triazin
Kondensationsprodukt aus 1 Mol Cyanurchlorid und
1 Mol2-(4-Amino-3-sulfo-phenyl)-amino-4-(2-carboxy-phenylamino)-6-chlor-s-triazin
Kondensationsprodukt aus 1 Mol Cyanurchlorid und
1 Mol 2-(3-Amino-4-sulfo-phenyl)-amino-4-n-butoxy-6-chlor-s-triazin
Tetrachlorpyrimidin
2,4,6-Trichlorpyrimidin
5-Cyan-2,4,6-trichlorpyrimidin
5-Nitro-2,4,6-trichlorpyrimidin
2,4-Difluor-6-chlorpyrimidin
2-Mathylsulfonyl-4-methyl-6-chlorpyrimidin
2-Methylsulfonyl-4,6-dichlorpyrimidin
2,3-Dichlorchinoxalin-5-carbonsäurechlorid
2,3-Dichlorchinoxalin-5-sulfonsäurechlorid
2,4-Dichlorchinazolin-6-carbonsäurechlorid
2,4-Dichlorchinazolin-6-sulfonsäurechlorid
2,4-Dichlorchinazolin-7-sulfonsäurechlorid
2,4-Difluorpyrimidin-6-carbonsäurechlorid
2-Methylsulfonyl-6-chlor-pyrimidin-5-carbonsäurechlorid
2,6-Bis-(methylsulfonyl)-pyrimidin-5-carbonsäurechlorid

Verwendet man zur Herstellung der Diazokomponente anstelle des obengenannten Kondensations produktes aus Nickelphthalocyaninsulfochlorid und 1,3-Diaminobenzolsulfonsäure das Kondensa tionsprodukt aus Nickelphthalocyaninsulfochlorid und einem der im folgenden genannten Amine und verfährt man im übrigen wie beschrieben. so erhäit man ebenfalls wertvolle grüne Reaktivfarbstoffe
1.4-Phenylendiamin-2-sulfonsäure
1,4-Phenylendiamin-2,5-disulfonsäure
1.4-Phenylendiamin-2 6-disulfonsäure
2,4-Diaminotoluol-6-sulfonsäure
2,6-Diaminotoluol-4-sulfonsäure
2,4-Diamino-1,3,5-trimethylbenzol-6-sulfonsaure
2,6-Diaminonaphthalin-4,8-disulfonsäure
1,5-Diaminonaphthalin-2-sulfonsäure
2,6-Diaminonaphthalin-8-sulfonsäure
1-Amino-4-aminomethyl-benzol-3-sulfonsaure
2-Amino-5-aminomethyl-naphthalin 1-sultor saure
1,3-Phenylendiamin (Acetylderivat anschlißend verseift)
1,2-Diaminoäthan
1,2-Diamino-2,2-dimethyl-äthan
1,6-Diaminohexan
1,2-Diaminoäthan (Acetylderivat. anschließend verseift)
4,4'-Diaminostilbendisulfonsäure-2,2
4-4'-Aminobenzoylamino-2-sulfo-anilin

Ersetzt man bei der Azokupplung die 1-(2-Sulfo-4-aminophenyl)-pyrazolon-(5)-3-carbonsäure durch eine molar gleiche Menge eines der folgenden Aminophenylpyrazolone und verfährt im übrigen wie oben angegeben, so erhält man ebenfalls wertvolle grüne Phthalocyanin-Azofarbstoffe
1-(3-Aminophenyl)-pyrazolon-(5)-3-carbonsäure
1-(4-Aminophenyl)-pyrazolon-(5)-3-carbonsäure
1-(2-Sulfo-5-aminophenyl)-pyrazolon-(5)-3 carbonsäure
1-(2-Sulfo-4-aminophenyl)-pyrazolon-(5)-3-carbonsäure
1-(2-Methyl-3-amino-5-sulfophenyl)-pyrazolon-(5)-3-carbonsäure
1-(2-Methyl-3-sulfo-5-aminophenyl)-pyrazolon-(5)-3-carbonsäure
1 (2.5-Disulfo-4-aminophenyl) pyrazolon (5) 3-carbonsäure
1-(2,6-Disulfo-4-aminophenyl)-pyrazolon-(5) 3 carbonsäure
1-(4'-Amino-2,2'-disulfo-stilbenyl-4)-pyrazolon-(5)-3-carbonsäure
1-(4'-Amino-2.2'-disulfo-stilbenyl-4)-3-methy-pyrazolon-(5)

### Beispiel 2

Verwendet man anstelle des in Beispiel 1 angegebenen Amins 3-[(3-Ammo 4 sulfo phenyl) amino sulfonyl-]nickelphthalocyanin-3 ,3",3 -trisulfonsäure die molar entsprechende Menge eines der m der folgenden Tabelle genannten Amine und verfährt im übrigen wie dort angegeben so erhalt man ebenfalls wertvolle, als Kupplungskomponenten geeignete, entsprechend substituierte Pyrazolone

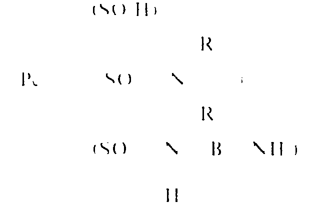

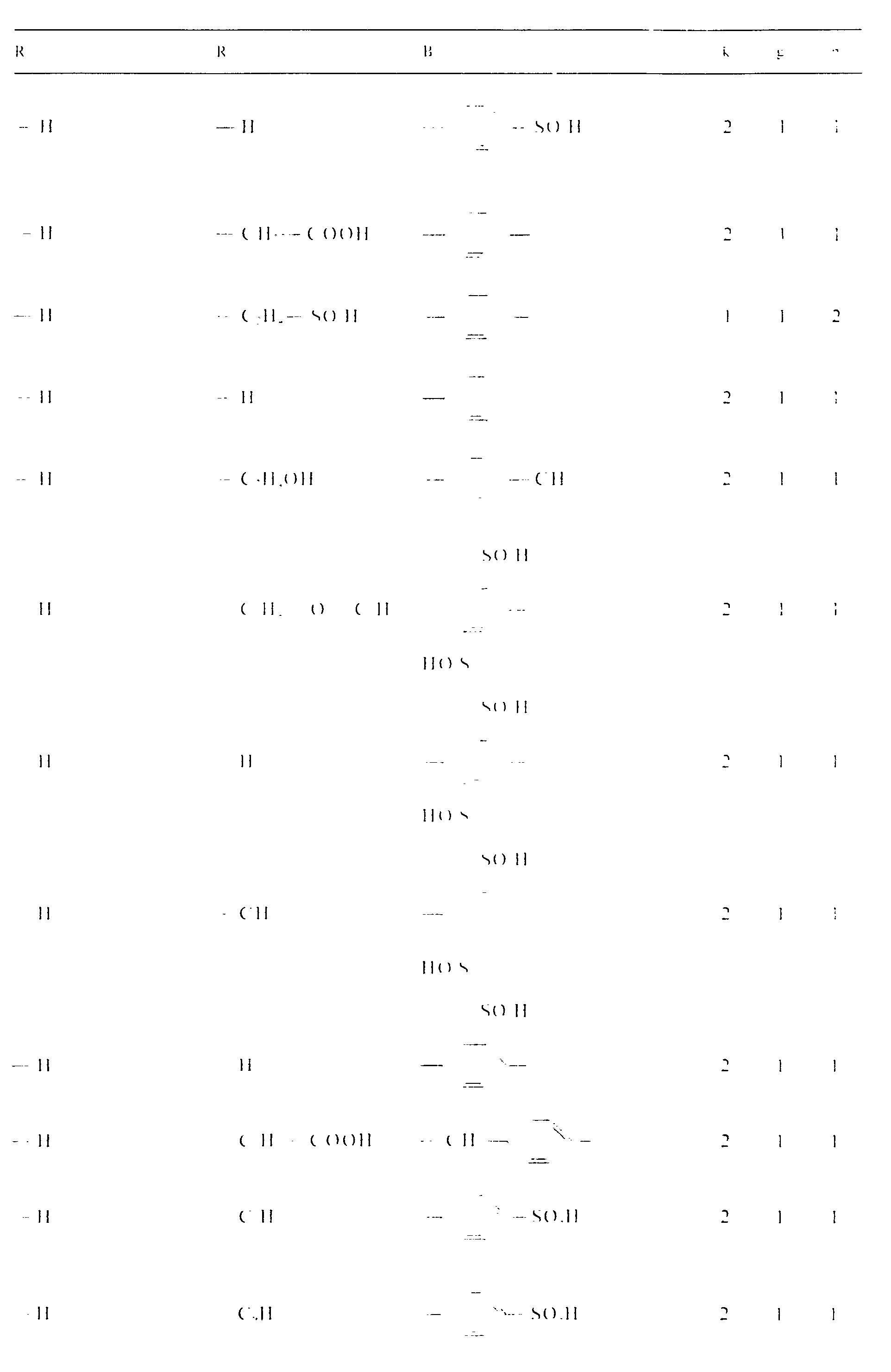

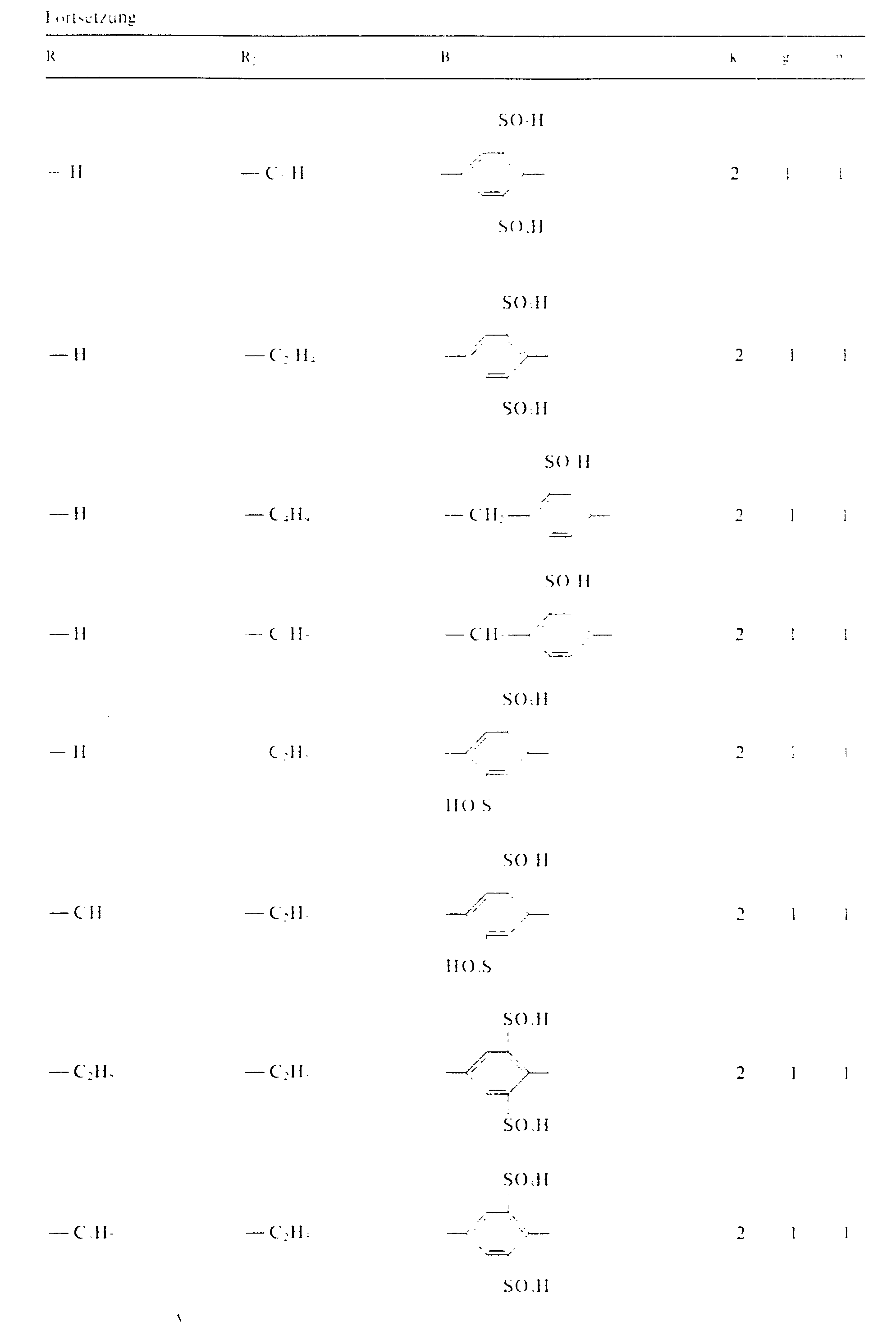

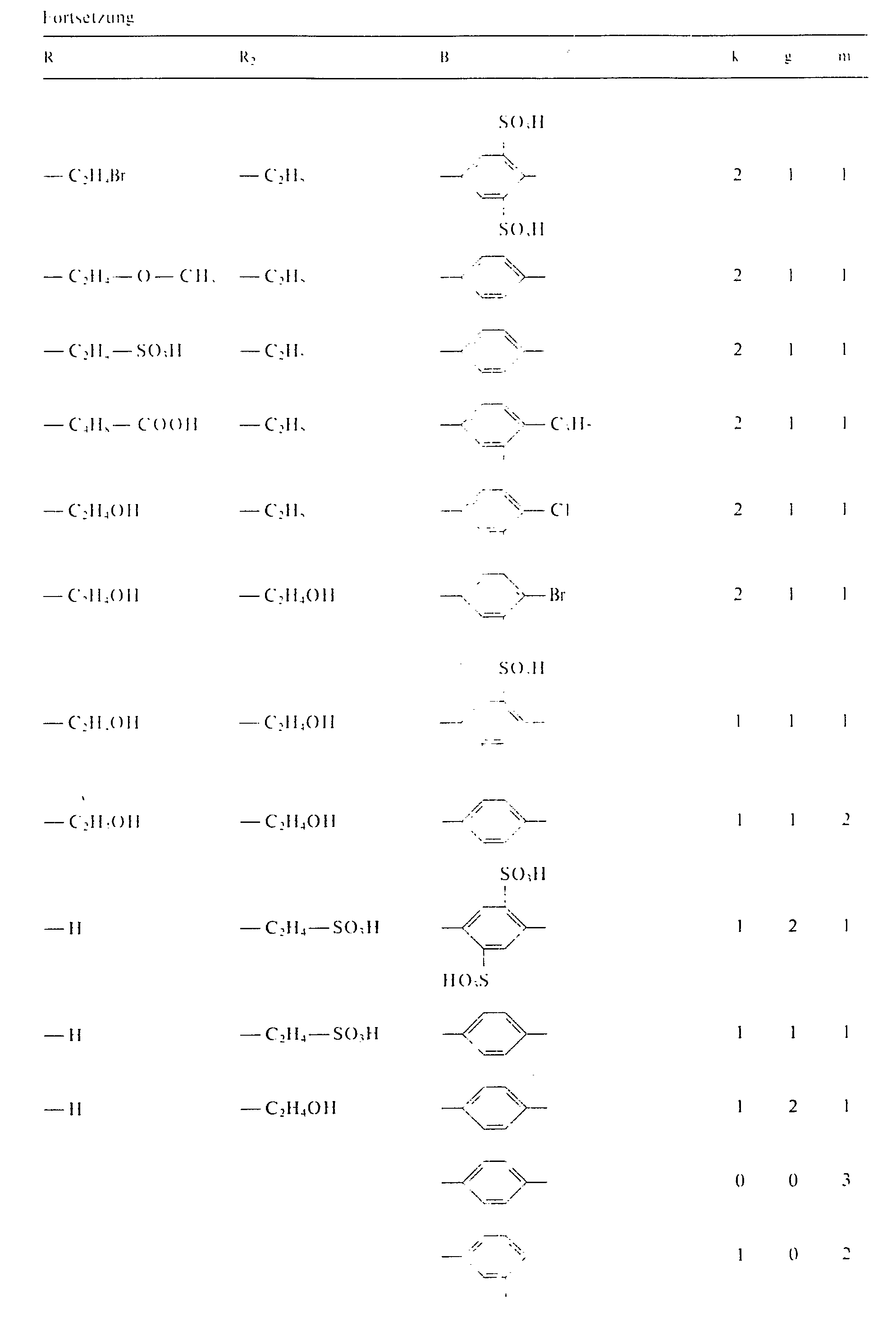

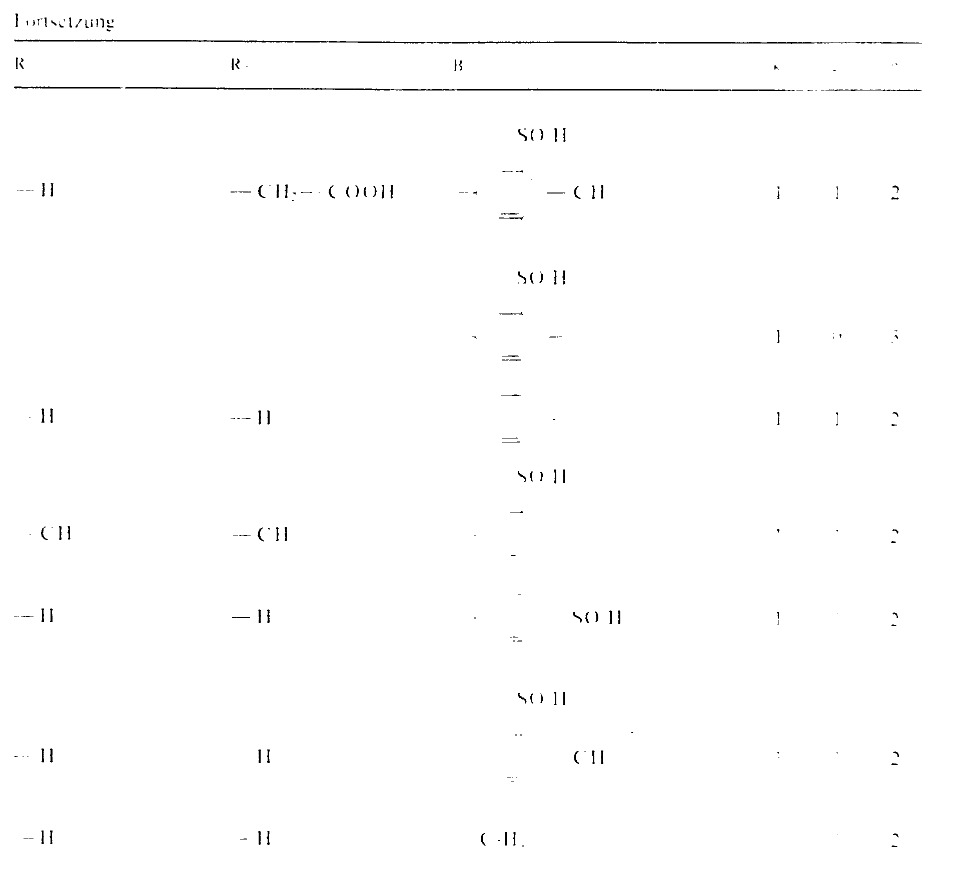

### Beispiel 3

Versetzt man den nach Beispiel 1 hergestellten Farbstoff mit einer mindestens moiaren Menge einer der im folgenden genannten, eine acylierbare Aminogruppe enthaltenden Verbindungen und erwärmt dann je eine Stunde auf 30 , 40 und 50 . wobei man den pH durch Zugabe von Alkali wie Natriumbicarbonat, Soda oder Natronlauge zwischen 4 und 7 hält, so erhält man ebenfalls wertvolle grüne Reaktivfarbstoffe Dabei kann im Falle von Ammoniak oder aliphatischen Aminen das Alkali durch ein zweites Mol des Amins ersetzt werden
Ammoniak
Methylamin
Diäthylamin
iso-Propylamin
Äthanolamin
Diäthanolamin
4-Aminophenyl-β-sulfatoäthylsulfon
Anilin
o-, m-, p-Toluidin
N-Methylanilin
Anilin 2-, 3-, 4-sulfonsäure
2-, 3-, 4-Aminobenzoesäure
Anilin-ω-methansulfosäure
β-Aminoäthansulfosäure
N-Methyltaurin
Bis-β-(β-chloräthylsulfonyl-)äthylamin
2-Aminotoluol-5-sulfonsäure
Aminoessigsäure
β-(β-Chloräthylsulfonyl-)äthylamin
Anilin 2-, 4- oder 2-, 5-disulfosäure
1-Naphthylamin-4-sulfonsäure
2-Naphthylamin-1,5- oder4,8-disulfonsäure
2-Naphthylamin-3,6,8- oder 4,6,8-trisulfonsäure
Kondensationsprodukt aus je einem Mol:
   p-Phenylendiamin, Cyanurchlorid und Anilin-3-sulfonsäure;
   Äthylendiamin, Cyanurchlorid und Anilin-2,4-disulfonsäure;
   1,4-Phenylendiamin-2,5-disulfonsäure und iso-propoxy-dichlortriazin;
   1,3-Phenylendiamin-4-sulfonsäure, Cyanurchlorid und Anilin-4-sulfonsäure;
   1,3-Phenylendiamin-4-sulfonsäure und β-Äthoxyäthoxydichlortriazin;
   p-Phenylendiaminsulfonsäure und Methoxydichlortriazin;
   p-Phenylendiaminsulfonsäure und Tetrachlorpyrimidin;
   p-Phenylendiaminsulfonsäure und 3,6-Dichlorpyridazin-4-carbonsäurechlorid.

### Beispiel 4

188 g m-Phenylendiamin-sulfonsäure werden neutral in etwa 3000 ml Wasser gelöst Zu dieser Lösung gibt man bei 0-5°C 190 g Cyanurchlorid, gelöst in Aceton, und hält gleichzeitig mit etwa 100 ml 10n Natronlauge den pH zwischen 6 und 7. Wenn keine m-Phenylendiaminsulfonsäure mehr nachweisbar ist, wird die neutrale Lösung mit 70 g Natriumnitrit versetzt und dann bei 0―3 C in 250 ml 10n Salzsäure eingerührt. Ist die Diazotierung beendet, gibt man die Diazosuspension zu einer neutralen Lösung von 362 g 1-(4-β-Sulfatoäthylsulfonylphenyl)-3-methyl-pyrazolon-(5) in 4000 ml Wasser und hält den pH-Wert durch gleichzeitige Zugabe von etwa 100 g Natriumbikarbonat zwischen 5 und 6. Die Kupplung ist in kurzer Zeit beendet. Anschließend gibt man die so erhaltene Lösung des Dichlortriazin-Farbstoffes zu einer neutralen Lösung von 1060 g 3-(3-Amino-4-sulfo-phenyl)-amino-sulfonyl-nickel-phthalocyanin-3,3',3"-trisulfonsäure, hergestellt in üblicher Weise durch Kondensation von Nickelphthalocyanintetrasulfochlorid mit 1,3-Diaminobenzol-4-sulfonsäure, in etwa 7000 ml Wasser und erwärmt auf 45-55 , wobei man den pH durch gleichzeitige Zugabe von etwa 84 g Natriumbikarbonat zwischen 5 und 6 hält. Der entstandene Farbstoff kann durch Aussalzen oder Sprühtrocknung isoliert werden.

### Beispiel 5

1360 g 3-{4-Sulfo-3-(4-chlor-6-(4-sulfo-3-aminophenylamino)-s-triazinyl-2-amino]-phenyl-aminosul- fonyl}-NiPc-3',3'', 3"'-trisulfonsäure, deren Herstellung im Beispiel 1 beschrieben ist, werden neutral in 10 000 ml Wasser gelöst Es werden 70 g Natriumnitrit zugegeben und in eine Mischung aus 250 ml 10n Salzsäure und 1500 g Eis eingerührt. Die Diazosuspension gibt man dann zu einer neutralen Lösung von 362 g 1-(4-β-Sulfatoäthylsulfonylphenyl)-3-methyl-pyrazolon-5 in 4000 ml Wasser und hält den pH-Wert durch gleichzeitige Zugabe von etwa 100 g Natriumbikarbonat zwischen 5 und 6. Der entstandene Farbstoff ist identisch mit dem nach obigem Beispiel 4 erhaltenen.

### Beispiel 6

535 g 3,3'-Bis-[(4-aminophenyl)-amino-sulfonyl]-nickelphthalocyanin-3",3"'-disulfosäure, hergestellt in üblicher Weise durch Kondensation von 0,5 Mol Nickelphthalocyanintetrasulfochlorid mit 1 Mol Acetyl-p-phenylendiamin und Verseifung des Kondensationsproduktes werden mit 3500 ml Wasser verrührt und durch Zugabe von 200 ml 10n Natronlauge gelöst.

Zu dieser Lösung gibt man 190 g Cyanurchlorid, gelöst in 600 ml Aceton, und hält gleichzeitig mit etwa 100 ml 10n Natronlauge den pH zwischen 6 und 7. Wenn keine diazotierbaren Aminogruppen mehr nachweisbar sind, gibt man eine neutrale Lösung von 188 g 1,3-Diaminobenzol-4-sulfonsäure zu, erwärmt auf etwa 55° und hält den pH mit etwa 53 g Soda zwischen 6 und 8. Die Reaktion ist beendet. wenn der pH-Wert konstant bleibt. Die eingesetzte 1,3-Diaminobenzol-4-sulfonsäure ist dann in einem Chromatogramm nur noch spurenweise sichtbar. Das so erhaltene Amin entspricht der allgemeinen Formel II. Es wird durch Zugabe von etwa 10 Vol.-% Kochsalz und etwa 1 Vol.-% konzentrierter Salzsäure gefällt. Anschließend wird der Farbstoff zu etwa 15 000 ml Wasser angerührt und durch Angabe von etwa 200 ml 10n Natronlauge gelöst. Es wird dann zur Diazotierung mit 70 g Natriumnitrit versetzt und in eine Mischung aus 1500 g Eis und 300 ml 10n Salzsäure eingerührt. Man rührt etwa 15 Minuten nach, nimmt einen eventuellen Überschuß Nitrit mit Aminosulfosäure weg und gibt die Diazosuspension dann zu einer neutralen Lösung von 392 g 1-(4-β--Sulfatoäthylsulfonylphenyl)-pyrazolon-(5)-3-carbonsäure, der man zuvor 100 g Natriumbikarbonat zugesetzt hat Die Kupplung ist in kurzer Zeit beendet Der entstandene Farbstoff kann durch Sprühtrocknung oder Aussalzen isoliert werden.

Ersetzt man bei der Kupplung die 1-(4-β-Sulfatoäthylsulfonylphenylpyrazolon-(5)-3-carbonsaure durch eine der folgenden Kupplungskomponenten und verfährt im übrigen wie oben beschrieben, so erhält man ebenfalls wertvolle erfindungsgemäße Farbstoffe:
1-(4-β-Sulfatoäthylsulfonylphenyl)-3-methyl pyrazolon-5;
1-(3-β-Sulfatoäthylsulfonylphenyl)-pyrazolon-(5)-3-carbonsäure;
1-(4-β-Phosphatoäthylsulfonylphenyl)-pyrazolon-(51-3-carbonsäure;
1-(4-β-Thiosulfatoäthylsulfonylphenyl)-pyrazolon-(5)-3-carbonsäure;
1-(4-β-Dimethylaminoäthylsulfonylphenyl)-pyrazolon-(5)-3-carbonsäure;
1-(6-β-Sulfatoäthylsulfonyl-8-sulfo-naphthyl-2)-pyrazolon-3-carbonsäure;
Kondensationsprodukt aus 1 Mol Cyanurchlorid und
1 Mol 1-(4 -Amino-2.2'-disulfo-stilbenyl-4)-3-methyl-pyrazolon-5;
Kondensationsprodukt aus 1 Mol Sulfanilsäure, 1 Mol Cyanurchlorid und
1 Mol 1-(2-Sulfo-4-aminophenyl)-pyrazolon-(5)-3-carbonsäure.

## Patentansprüche

1. Wasserlösliche faserreaktive grüne Phthalocyanin-Azofarbstoffe der Formel I 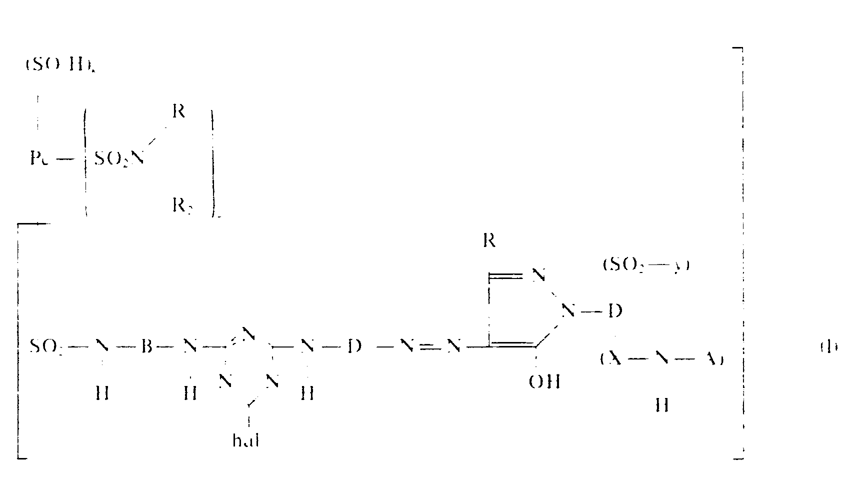 worin
Pc den Rest eines metallhaltigen oder metallfreien Phthalocyanins,
D und D' den Phenylen-, Naphthylen-, Diphenyl-, Stilben-, Phenylcarbamoylphenylrest, den Disulfostilben- oder den Disulfo-diphenylrest, wobei D und D' gleich oder verschieden und im Falle des Phenylen- oder Naphthylenrestes gegebenenfalls durch eine -S0₃H- oder - COOH-Gruppe und pro Kern durch einen Substituenten der Gruppe Alkoxy mit 1 bis 2 C-Atomen oder eine zusätzliche -SO₃H- oder -COOH-Gruppe, durch ein oder zwei gleiche oder verschiedene Halogenatome oder durch ein bis drei gleiche oder verschiedene Alkylreste mit 1 bis 2 C-Atomen substituiert sein können,
B den Rest eines aliphatischen Kohlenwasserstoffes mit 2 bis 6 C-Atomen, den gegebenenfalls durch eine -S03H- oder - COOH-Gruppe substituierten Phenylen- oder Naphthylen-Rest. der pro Kern durch einen Substituenten der Gruope Alkoxy mit 1 bis 2 C-Atomen oder eine zusätzliche -SO₃H- oder -COOH-Gruppe, durch ein oder zwe; gleiche oder verschiedene Halogenatome oder durch ein bis drei gleiche oder verschiedene Alkylreste mit 1 bis 2 C-Atomen substituiert sein kann, den Disulfostilbenrest oder den Disulfo diphenylrest
A den Rest einer faserreaktiven Acylierungskomponente aus der Reihe der Triazine, Chinoxaline, Phthalazine, Pyridazine, Pyrimidine oder α,β-ungesättigten aliphatischen Carbonsäuren,
y den Vinylrest, den β-Sulfatoäthylrest, den β-Phosphatoäthylrest, den β-Thiosulfatoäthylrest, den ß-Dimethylaminoäthyl- oder den β-Diäthylaminoäthylrest,
R, Wasserstoff, Methyl, Carboxymethyl, Sulfomethyl, einen gegebenenfalls durch CI, Br, OH, Alkoxy mit 1 bis 2 C-Atomen, - COOH oder - S0₃H substituierten Alkylrest mit 2 bis 6 C-Atomen oder Phenyl, wobei der aromatische Kern durch CI, Alkyl und/oder Alkoxy mit 1 bis 2 C-Atomen, Alkanoylamino mit 1 bis 2 C-Atomen, - COOH, - CONH₂, - S0₂NH₂ oder - SO₃H substituiert sein kann,
R₂ Wasserstoff, Methyl, Carboxymethyl, Sulfomethyl, einen gegebenenfalls durch CI, Br, OH, Alkoxy mit 1 bis 2 C-Atomen, - COOH oder ―SO₃H substituierten Alkylrest mit 2 bis 6 C-Atomen oder einen unsubstituierten Alkylrest mit 6 bis 20 C-Atomen,
R₃ Methyl, Carboxy, Methoxycarbonyl oder Äthoxycarbonyl,
hal Chlor, Brom oder Fluor,
X eine direkte Bindung oder für den Fall, daß D für Phenylen oder Naphthylen steht, auch Methylen oder Äthylen,
k 1, 2 oder 3,
g 0 oder 1,
m 1, 2 oder 3,
n 0 oder 1 und
p 0 oder 1 bedeuten, wobei die Summe von k, g und m = 3 oder 4 und die Summe von n und p = 1 ist, ihre Alkali-, Ammonium- oder Erdalkalisalze.

2. Phthalocyanin-Azofarbstoffe nach Anspruch 1, dadurch gekennzeichnet, daß k=2 oder 3, g=0. m= 1 oder 2 ist.

3. Wasserlösliche, faserreaktive Phthalocyanin-Azofarbstoffe gemäß den Ansprüchen 1 oder 2. dadurch gekennzeichnet, daß Pc den Rest eines Kupfer-, Kobalt- oder Nickelphthalocyanins bedeutet

4. Verfahren zur Herstellung der neuen wasserlöslichen faserreaktiven grünen Phthalocyanin-Azofarbstoffe der Ansprüche 1 bis 3, dadurch gekennzeichnet, daß man ein Mol eires Amins der Formel II 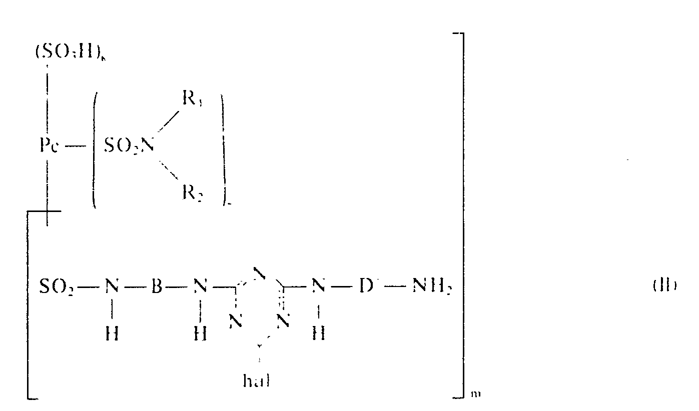 diazotiert und auf m Mole eines Pyrazolons der allgemeinen Formel III 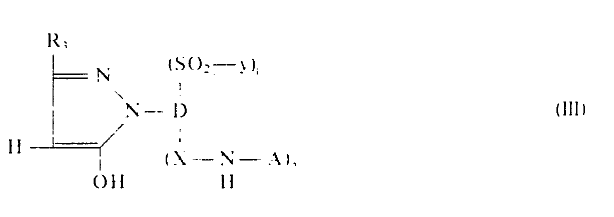 kuppelt.

5. Verfahren zur Herstellung der neuen wasserleichen faserreaktiven grünen Phthalocyanin-Azo farbstoffe der Ansprüche 1 bis 3, wobei n = 1 und p=0 ist, dadurch gekennzeichnet, daß man ein Mol eines Farbstoffes der allgemeinen Formel la 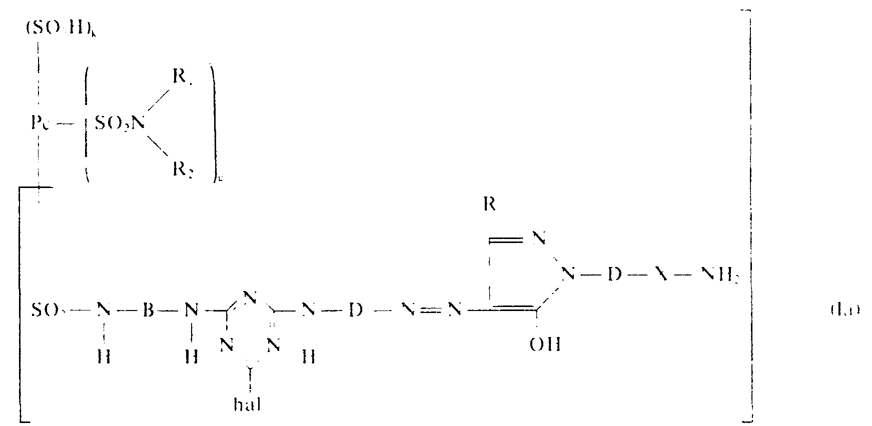 mit m Molen eines Chlorids der Formel IV 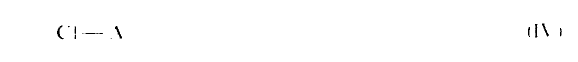 acyliert.

6. Verfahren zur Herstellung der neuen wasserlöslichen faserreaktiven grünen Phthalocyanin-Azofarbstoffe der Ansprüche 1 bis 3, dadurch gekennzeichnet, daß man m Mole eines dihalogentriazinhaltigen Azofarbstoffes der allgemeinen Formel V 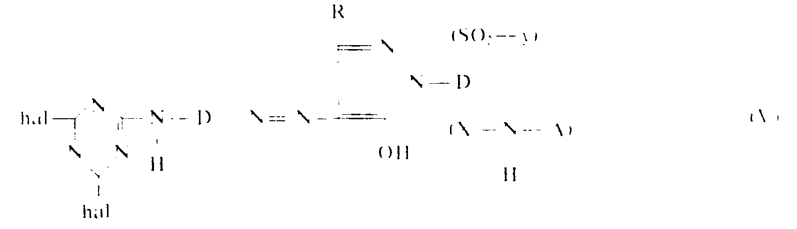 wobei A nicht für den Rest eines Dihalogentriazins steht, mit einem Mol eines Phthalocyaninderivats der Formel VI 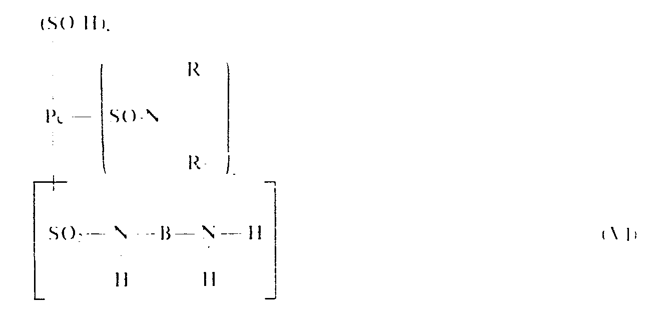 kondensiert.

7. Verwendung der wasserlöslichen faserreaktiven grünen Phthalocyanin-Azofarbstoffe der Ansprüche 1 bis 3 zum Färben und Bedrucken von Zellulose und Zellulose enthaltenden Textilmaterialien.

## Claims

1. Water-soluble fibre-reactive green pha alocyanine azo dyestuff of the formula I 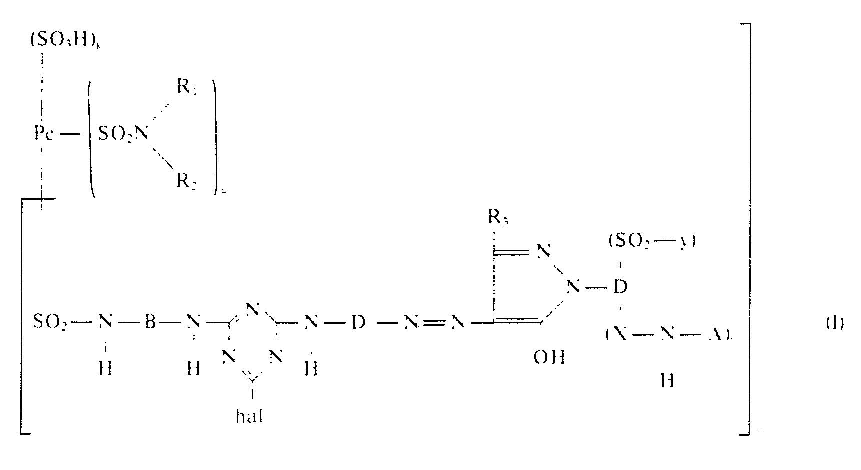 wherein
Pc is the radical of a metal-containing or metal-free phthalocyanine;
D and D' denote the phenylene, naphthylene, diphenyl, stilbene and phenylcarbamoylphenyl radicals, the disulphostilbene or disulphodiphenyl radical, it being possible for D and D' to be the same or different and, in the case of the phenylene or naphthylene radical, to be substituted with a -S0₃H- or -COOH-group and, per nucleus, with a substituent selected from the group consisting of alkoxy having 1 to 2 carbon atoms or an additional - S0₃H- or - COOH-group, with one or two halogen atoms which may be the same or different or with one to three alkyl radicals having one to two carbon atoms, which radicals may be the same or different;
B denotes the radical of an aliphatic hydrocarbon having 2 to 6 carbon atoms, the phenylene or naphthylene radical which may be substituted with a - S0₃H- or - COOH-group and, per nucleus, with a substituent selected from the group consisting of alkoxy having 1 to 2 carbon atoms or an additional - S0₃H- or - COOH-group, with 1 or 2 halogen atoms which may be the same or different or with 1 to 3 alkyl radicals having 1 to 2 carbon atoms, which radicals may be the same or different, and further denotes the disulphostilbene radical or disulphodiphenyl radical,
A denotes the radical of a fibre-reactive acylating component selected from the series comprising triazines, quinoxalines, phthalazines, pyridazines, pyrimidines or α,β-unsaturated aliphatic carboxylic acids;
y denotes the vinyl, the β-sulphato ethyl, the β-phosphato ethyl, the β-thiosulphato ethyl, the β-dimethylamino ethyl and β-diethytamino ethyl radicals;
R, denotes hydrogen, carboxymethyl, sulphomethyl, an alkyl radical having 2 to 6 carbon atoms which may be substituted with CI, Br, OH, alkoxy with 1 to 2 carbon atoms, - COOH or - SO₃H, or denotes phenyl, it being possible for the aromatic nucleus to be substituted with CI, alkyl and/or alkoxy with 1 to 2 carbon atoms, alkanoylamino with 1 to 2 carbon atoms, ―COOH, ―CONH₂, -SO₂NH₂ or -SO₃H;
R₂ denotes hydrogen, methyl, carboxymethyl, sulphomethyl, an alkyl radical with 2 to 6 carbon atoms which may be substituted with Cl, Br, OH, alkoxy having 1 to 2 carbon atoms, - COOH or - SO₃H, or an unsubstituted alkyl radical having 6 to 20 carbon atoms;
R₃ denotes methyl, carboxy, methoxycarbonyl or ethoxycarbonyl;
hal denotes chlorine, bromine or fluorine;
X denotes a direct bond and when D is a phenylene or a naphthylene, X may also be methylene or ethylene;
K denotes 1, 2 or 3;
g denotes 0 or 1;
m denotes 1, 2 or 3;
n denotes 0 or 1 and
p denotes 0 or 1, the sum of K, g and m being 3 or 4 and the sum of n and p being 1, their alkalimetal, ammonium or alkaline earth salts.

2. Phthalocyanine azo dyestuffs as claimed in claim 1, characterised in that k is 2 or 3, g is 0 and m is 1 or 2.

3. Water-soluble fibre-reactive phthalocyanine azo dyestuffs as claimed in claim 1 or 2, characterised in that Pc is the radical of a copper, cobalt or nickel phthalocyanine

4. Process for producing the new water-soluble fibre-reactive green phthalocyanine azo dyestuffs as claimed in claims 1 to 3, characterised in that one mol of an amine of the formula II 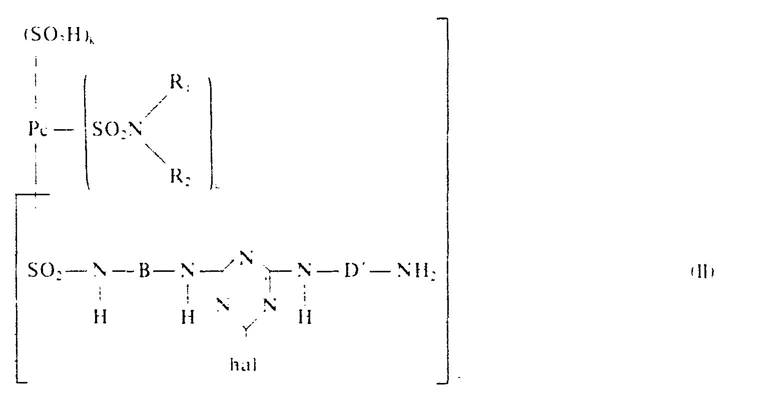 is diazotised and is coupled with m mols of a pyrazolone of the general formula III

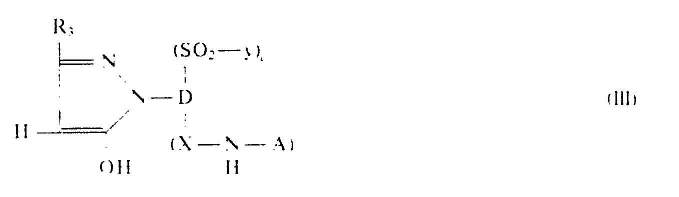

5. Process for producing the new water-soluble fibre-reactive green phthalocyanine azo dyestuff as claimed in claims 1 to 3, n being 1 and p being 0, characterised in that one mol of a dyestuff of the general formula la 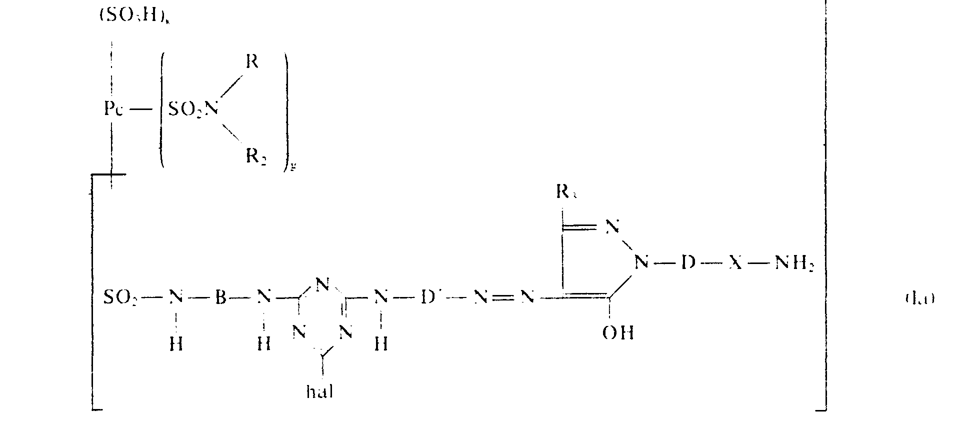 is acylated with m mols of a chloride of the general formula IV

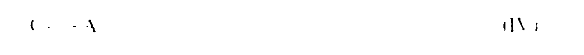

6. Process for producing the new water-soluble fibre-reactive green phthalocyanine azo dyestuff as claimed in claims 1 to 3, characterised in that m mols of a dihalogentriazine-containing azo dyestuff of the general formula V 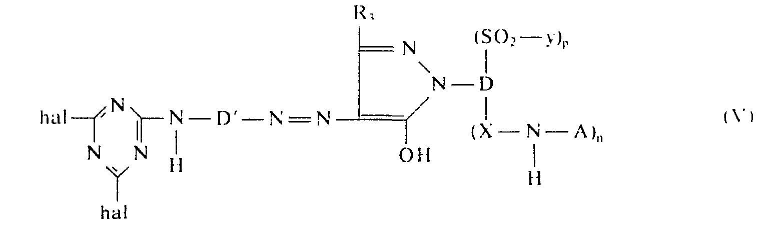 wherein A may not be the radical of a dihalogentriazine, are condensed with one mol of a phthalocyanine derivative of the formula VI

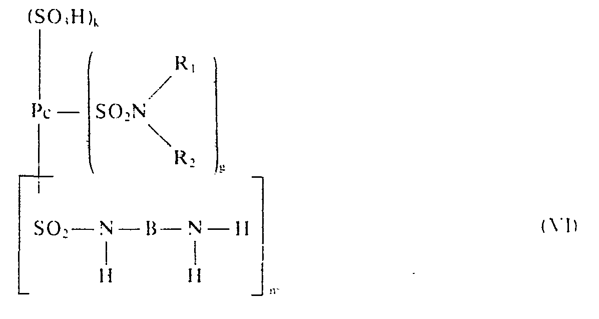

7. Use of the water-soluble fibre-reactive green phthalocyanine azo dyestuffs as claimed in claims 1 to 3 for the dyeing and printing of cellulose and cellulose-containing textile material.

## Revendications

1. Colorants azoiques phtalocyaniques verts, solubles dans l'eau et réactifs à l'egard des fibres, colorants qui répondent à la formule 1 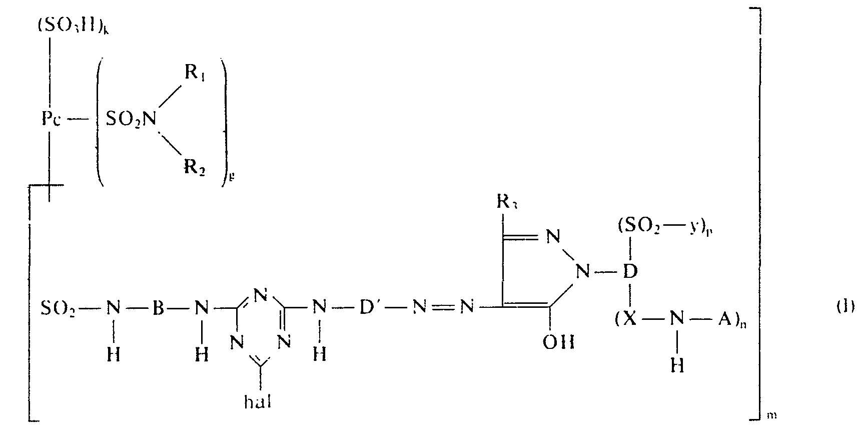 dans laquelle:
Pc représente le radical d'une phtalocyanine métallisée ou non.
D et D' représentent chacun un radical phénylène, naphtylène, biphénylylène, stilbène, phénylcarbamoylphényle, disulfostilbène ou disulfo-biphénylylène, D et D' étant identiques ou différents et, dans le cas du radical phénylène ou naphtylène, pouvant porter éventuellement un groupe - S0₃H ou - COOH et, par noyau, un substituant pris dans l'ensemble constitué par les alcoxy en Ci et C₂ ou un groupe -SO₃H ou -COOH supplémentaire, un ou deux atomes d'halogènes identiques ou différents ou un, deux ou trois radicaux alkyles, identiques ou différents, et contenant un ou deux atomes de carbone,
B représente le radical d'un hydrocarbure aliphatique en C₂-C₆, un radical phényléne ou naphtylène éventuellement porteur d'un groupe - S0₃H ou - COOH et qui peut porter, par noyau, un radical alcoxy en Clou C₂ ou un groupe - S0₃H ou - COOH supplémentaire, un ou deux atomes d'halogènes identiques ou différents ou d'un à trois radicaux alkyles en C₁ ou C₂, identiques ou différents, ou représente un radical de disulfostilbène ou un radical de disulfo-biphényle,
A représente le radical d'une composante d'acylation réactive à l'égard des fibres, prise dans l'ensemble constitué par les tirazines, les quinoxalines, les phtalazines, les pyridazines, les pyrimidines et les acides carboxyliques aliphatiques insaturés en α,β,
y représente un radical vinyle, β-sulfatoéthyle, β-phosphatoéthyle. β-thiosulfatoéthyle, β-diméthyl- aminoéthyle ou β-diéthylaminoéthyle,
Ri représente l'hydrogène, un radical méthyle, carboxyméthyle ou sulfométhyle, un radical alkyle en C₂―C₆ éventuellement porteur de CI, Br, -OH, d'un alcoxy en C₁―C₂ ou d'un groupe - COOH ou ―SO₃H, ou un radical phényle dont le noyau aromatique peut porter CI, un alkyle et/ou un alcoxy en Ci ou C₂, un alcanoyl-amino en C₁ ou C₂, ou un groupe -COOH, -CONH₂, ―SO₂H₂ ou -S0₃H;
R₂ représente l'hydrogène, un radical méthyle, carboxyméthyle ou sulfométhyle, un radical alkyle en C₂-C₆, éventuellement porteur de CI, Br, -OH, d'un alcoxy en Ci ou C₂ ou d'un groupe -COOH ou -S0₃H, ou un radical alkyle en C₆-C₂₀ non substitué;
R₃ représente un radical méthyle, carboxy, méthoxycarbonyle ou éthoxycarbonyle;
hal représente le chlore, le brome ou le fluor;
X représente une liaison directe ou, dans le cas ou D désigne un radical phénylène ou naphtylène,
k peut également représenter un radical méthylène ou éthylène;
g est égal à 1, à 2 ou à 3,
m est égal à 0 ou à 1,
n est égal à 1, à 2 ou à 3,
p est égal à 0 ou à 1, est égal à 0 ou à 1. la somme k + g + m étant égale à 3 ou à 4 et la somme n + p étant égale à 1, ainsi que leurs sels de métaux alcalins, d'ammonium et de métaux alcalino-terreux

2. Colorants qzoiques phtalocyaniques selon la revendication 1, caractérisés en ce que k est égal a 1 ou à 3, g à 0, et m à 1 ou à 2.

3. Colorants azoiques phtalocyaniques hydrosulubles, réactifs à l'égard des fibres, selon l'une des revendications 1 et 2, caractérisés en ce que Pc représente le radical d'une phtalocyanine métallisée par du ciuvre, du cobalt ou du nickel.

4. Procédé de préparation des nouveaux colorants azoïques phtalocyaniques verts, solubles dans l'eau et réactifs à t'égard des fibres, selon l'une des revendications 1 à 3, procédé caractérisé en ce qu'on diazote 1 mole d'une amine de formule II 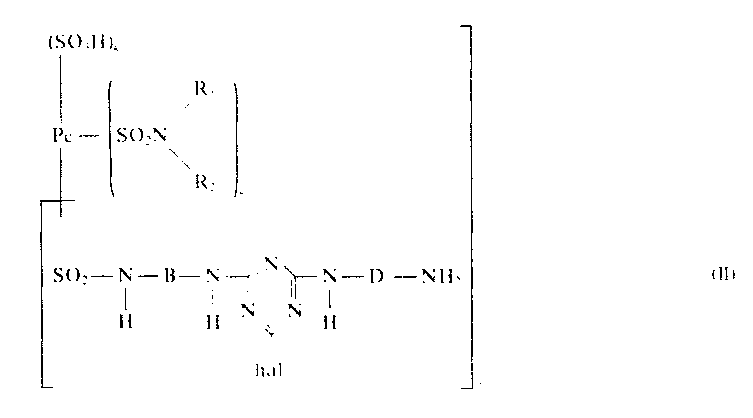 et on copule sur m moles d'une pyrazolone de formule générale III

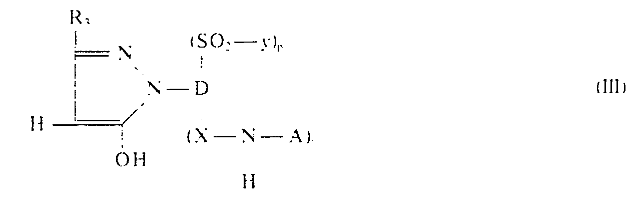

5. Procédé de préparation des nouveaux colorants azoïques phtalocyaniques verts, colubles dans l'eau et réactifs a l'égard des fibres, selon l'une quelconque des revendications 1 à 3, et pour lesquels n est égal à 1 et p est égal à 0, procédé caractérisé en ce qu'on acyle 1 mole d'un colorant de formule générale la 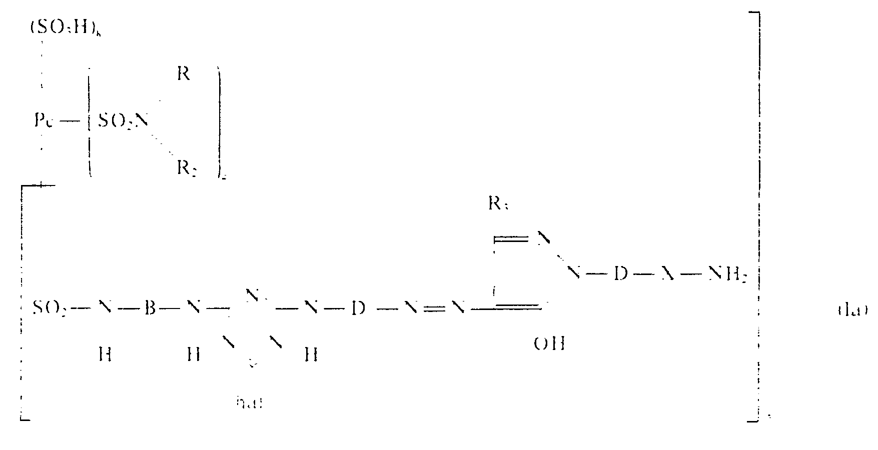 avec m moles d'un chlorure de formule IV

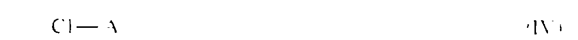

6. Procédé de préparation des nouveaux colorants azoïques phtalocyaniques verts, solubles dans l'eau et réactifs a l'égard des fibres, selon l'une quelconque des revendications 1 a 3, procède caractérisé en ce qu'on condense m moles d'un colorant azoiques contenant un radical de dihalogéno-triazine et répondant à la formule générale V 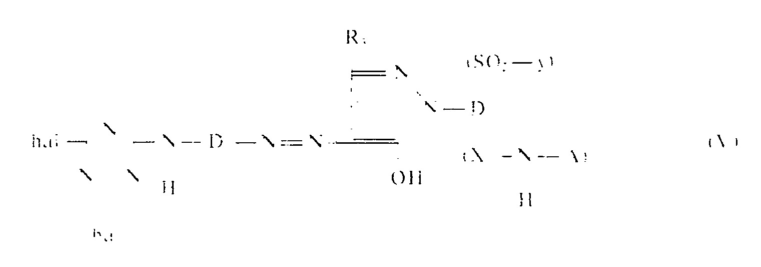 dans laquelle A n'est pas un radical de dihalogéno-triazine, avec 1 mole d un composé phtalocyanₗque de formule VI

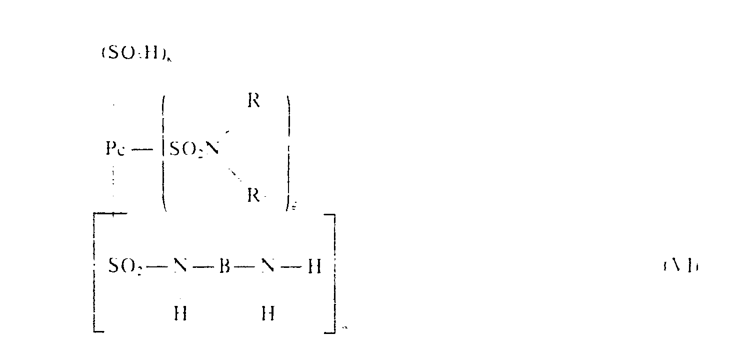

7. Utilisation des colorants azoiques phtalocyaniques verts, solubles dans l'eau et réactifs à l'égard des fibres, selon l'une quelconque des revendications 1 a 3, pour la teinture et l'impression de la cellulose et de matières textiles contenant de la cellulose.
